(19) Europäisches Patentamt
European Patent Office
Office européen des brevets

(11) **EP 4 618 643 A1**

(12) **EUROPEAN PATENT APPLICATION**
published in accordance with Art. 153(4) EPC

(43) Date of publication:
**17.09.2025 Bulletin 2025/38**

(21) Application number: **24741755.3**

(22) Date of filing: **12.01.2024**

(51) International Patent Classification (IPC):
**H04W 56/00** (2009.01)    **H04W 8/00** (2009.01)
**H04W 4/80** (2018.01)    **H04W 48/16** (2009.01)
**H04W 74/08** (2024.01)    **H04W 84/12** (2009.01)

(52) Cooperative Patent Classification (CPC):
**H04W 4/80; H04W 8/00; H04W 48/16; H04W 56/00;
H04W 74/08; H04W 84/12**

(86) International application number:
**PCT/KR2024/000639**

(87) International publication number:
**WO 2024/151134 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023  KR 20230005738
17.02.2023  KR 20230021529**

(71) Applicant: **Samsung Electronics Co., Ltd.
Suwon-si, Gyeonggi-do 16677 (KR)**

(72) Inventors:
• **CHOI, Junyoung
Suwon-si, Gyeonggi-do 16677 (KR)**

• **KIM, Junsung
Suwon-si, Gyeonggi-do 16677 (KR)**
• **SEO, Seungbeom
Suwon-si, Gyeonggi-do 16677 (KR)**
• **OH, Hyunseob
Suwon-si, Gyeonggi-do 16677 (KR)**
• **LEE, Soonho
Suwon-si, Gyeonggi-do 16677 (KR)**
• **JUNG, Buseop
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND DEVICE FOR WI-FI AWARE COMMUNICATION**

(57)    A method of a first electronic device for Wi-Fi Aware communication according to an embodiment of the present disclosure comprises operations of: transmitting a Bluetooth Low Energy (BLE) advertisement message including a neighbor awareness networking (NAN) synchronization frame format; transmitting a first service discovery frame (SDF) message to a second electronic device for service discovery between the first electronic device and the second electronic device; receiving a second SDF message corresponding to the first SDF message from the second electronic device; and establishing a NAN connection with the second electronic device.

FIG. 2

## Description

[Technical Field]

The disclosure relates to a method for Wi-Fi aware communication between electronic devices.

[Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

Wi-Fi CERTIFIED Wi-Fi Aware™ (Wi-Fi Aware) is a technology that extends the capabilities of Wi-Fi by enabling rapid discovery, connection, and data exchange with other Wi-Fi devices without the need for traditional network infrastructure, Internet connection, or GPS signals. Wi-Fi aware may provide the function of enabling a mutual search and direct connection between devices even without any other type of connection. Wi-Fi aware may also be referred to as neighbor awareness networking (NAN).

[Detailed Description of the Invention]

[Technical Problem]

The disclosure proposes a method for operating an electronic device capable of reducing the connection setup time in Wi-Fi aware communication.

[Technical Solution]

According to an embodiment of the disclosure, a method for a first electronic device for Wi-Fi aware communication may comprise transmitting a Bluetooth low energy (BLE) advertisement message including a neighbor awareness networking (NAN) synchronization frame format, transmitting a first service discovery frame (SDF) message to a second electronic device for service discovery between the first electronic device and the second electronic device, receiving a second SDF message corresponding to the first SDF message from the second electronic device, and establishing an NAN connection with the second electronic device.

According to an embodiment of the disclosure, a method for a second electronic device for Wi-Fi aware communication may comprise receiving, from a first electronic device, a Bluetooth low energy (BLE) advertisement message including a neighbor awareness networking (NAN) synchronization frame format, receiving, from the first electronic device, a first service discovery frame (SDF) message for service discovery between the first electronic device and a second electronic device, transmitting a second SDF message corresponding to the first SDF message to the first electronic device, and establishing an NAN connection with the first electronic device.

According to an embodiment of the disclosure, a first electronic device for Wi-Fi aware communication comprises a transceiver, and a controller. The controller may control to transmit a Bluetooth low energy (BLE) advertisement message including a neighbor awareness networking (NAN) synchronization frame format, control to transmit a first service discovery frame (SDF) message to a second electronic device for service discovery between the first electronic device and the second electronic device, receive a second SDF message corresponding to the first SDF message from the second electronic device, and establish an NAN connection with the second electronic device.

According to an embodiment of the disclosure, a second electronic device for Wi-Fi aware communication comprises a transceiver, and a controller. The controller may receive, from a first electronic device, a Bluetooth low energy (BLE) advertisement message including a neighbor awareness networking (NAN) synchronization frame format, receive, from the first electronic device, a first service discovery frame (SDF) message for service discovery between the first electronic device and a second electronic device, control to transmit a second SDF message corresponding to the first SDF message to the first electronic device, and establish an NAN connection with the first electronic device.

[Advantageous Effects]

According to an embodiment of the disclosure, an electronic device may reduce the connection setup time during Wi-Fi aware communication.

According to an embodiment of the disclosure, an electronic device may enhance communication efficiency by adaptively selecting an operating channel during Wi-Fi aware communication.

[Brief Description of Drawings]

FIG. 1 is a view illustrating a communication setup procedure between electronic devices according to an embodiment of the disclosure;

FIG. 2 illustrates an example of an NAN connection (Wi-Fi NAN) setup procedure between electronic devices according to an embodiment of the disclosure;

FIG. 3 illustrates another example of an NAN connection (Wi-Fi NAN) setup procedure between electronic devices according to an embodiment of the disclosure;

FIG. 4 illustrates another example of an NAN connection (Wi-Fi NAN) setup procedure between electronic devices according to an embodiment of the disclosure;

FIG. 5 illustrates an example of a BLE advertisement message including a NAN synchronization frame format according to an embodiment of the disclosure;

FIG. 6 illustrates a NAN IE format and NAN attributes included in NAN beacon frames, respectively, according to an embodiment of the disclosure;

FIG. 7 illustrates an example for describing BLE discovery and NAN triggering operations according to an embodiment of the disclosure;

FIG. 8 illustrates another example of an NAN connection (Wi-Fi NAN) setup procedure between electronic devices according to an embodiment of the disclosure;

FIG. 9 illustrates another example for describing BLE discovery and NAN triggering operations according to an embodiment of the disclosure;

FIG. 10 illustrates an example of a NAN service discovery frame (SDF) including a piggyback NAN synchronization frame format according to an embodiment of the disclosure;

FIG. 11 illustrates a NAN SDF format and NAN attributes according to an embodiment of the disclosure;

FIG. 12 illustrates an example illustrating a process of piggybacking a NAN synchronization frame format to a NAN SDF Publish message, according to an embodiment of the disclosure;

FIG. 13 illustrates another example illustrating a process of piggybacking a NAN synchronization frame format to a NAN SDF Publish message according to an embodiment of the disclosure;

FIG. 14 is a view illustrating a NAN connection process between electronic devices according to an embodiment of the disclosure;

FIG. 15 is a view illustrating NAN discovery, synchronization, and service discovery according to an embodiment of the disclosure;

FIG. 16 illustrates a BSS load element format according to an embodiment of the disclosure;

FIG. 17 illustrates an advertising physical channel PDU according to an embodiment of the disclosure;

FIGS. 18, 19, and 20 are views illustrating an adaptive channel selection process according to an embodiment of the disclosure;

FIG. 21 is a view illustrating a communication setup procedure between electronic devices according to an embodiment of the disclosure;

FIGS. 22 and 23 illustrate NAN SDF messages and piggyback data according to an embodiment of the disclosure;

FIG. 24 is a view illustrating a structure of an electronic device (sender) according to an embodiment of the disclosure;

FIG. 25 is a view illustrating a structure of an electronic device according to an embodiment of the disclosure;

FIGS. 26A and 26B are views illustrating a communication setup procedure between electronic devices according to an embodiment of the disclosure;

FIG. 27A illustrates an example of an NAN connection (Wi-Fi NAN) setup procedure between electronic devices in a passive scanning mode according to an embodiment of the disclosure;

FIG. 27B illustrates an example of an advertisement indication message ADV_IND in a passive scanning mode according to an embodiment of the disclosure;

FIG. 27C illustrates an example for describing BLE discovery and NAN triggering operations in a passive scanning mode according to an embodiment of the disclosure;

FIG. 28A illustrates another example of a NAN connection (Wi-Fi NAN) setup procedure between electronic devices in an active scanning mode according to an embodiment of the disclosure;

FIG. 28B illustrates an example of an advertisement indication message ADV_IND in an active scanning mode according to an embodiment of the disclosure; and

FIG. 28C illustrates an example of a scan response message SCAN_RESP in an active scanning mode according to an embodiment of the disclosure.

[Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Wi-Fi CERTIFIED Wi-Fi Aware™ (Wi-Fi Aware) is a technology that extends the capabilities of Wi-Fi by enabling rapid discovery, connection, and data exchange with other Wi-Fi devices without the need for traditional network infrastructure, Internet connection, or GPS signals. Wi-Fi aware may provide the function of enabling a mutual search and direct connection between devices even without any other type of connection. Wi-Fi aware may also be referred to as neighbor awareness networking (NAN).

Wi-Fi aware networking may work by forming a cluster with a peripheral device or by creating a new cluster if the device is the first device in the area. An application may communicate with a Wi-Fi aware system service that manages the device's Wi-Fi aware hardware using an application programming interface (Wi-Fi aware API). For example, a Wi-Fi aware network connection may support higher processing speeds over long distances where Bluetooth connections are not reachable. For example, the Wi-Fi aware network connection may be useful for apps that share large amounts of data between users, such as photo-sharing apps.

Wi-Fi CERTIFIED Wi-Fi Direct™ may connect Wi-Fi devices directly to each other to easily and conveniently perform functions such as printing, sharing, synchronizing, gameplay, and content display on other devices. Wi-Fi Direct devices may be connected to each other without a conventional home/office/hotspot network connection.

Bluetooth low energy (BLE) refers to a technology that operates at lower power than conventional Bluetooth (or Bluetooth classic) and may be used in electronic devices such as smart bands, watches, and beacons, for example.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

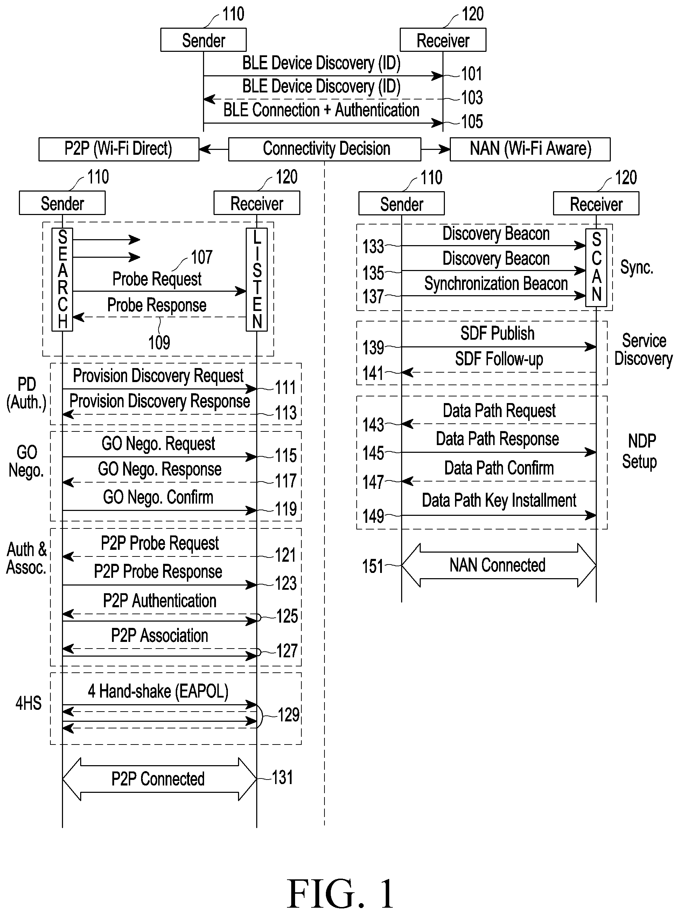

FIG. 1 is a view illustrating a communication setup procedure between electronic devices according to an embodiment of the disclosure.

Referring to FIG. 1, the first electronic device (sender) 110 and the second electronic device (receiver) 120 may perform BLE discovery/connection/authentication therebetween through BLE communication. The first electronic device (sender) 110 and the second electronic device (receiver) 120 may determine which connection between Wi-Fi Direct (or P2P) and Wi-Fi aware (or NAN) will proceed after BLE communication.

In operation 101, the first electronic device (sender) 110 may transmit a BLE device discovery message including its ID to the second electronic device (receiver) 120. In operation 103, the second electronic device (receiver) 120 may transmit a BLE device discovery message including its ID to the first electronic device (sender) 110. In operation 105, the first electronic device (sender) 110 and the second electronic device (receiver) 120 may perform BLE connection and authentication through at least one message exchange.

After the BLE communication, when the first electronic device (sender) 110 and the second electronic device (receiver) 120 determine to perform a Wi-Fi Direct (or P2P) connection, in operation 107, the first electronic device (sender) 110 may transmit a probe request message for search to the second electronic device 120. In operation 109, the second electronic device (receiver) 120 may transmit a probe response message to the first electronic device (sender) 110. In operation 111, the first electronic device (sender) 110 may transmit a provision discovery request message to the second electronic device (receiver) 120 and, in operation 113, the second electronic device (receiver) 120 may transmit a provision discovery response message to the first electronic device (sender) 110.

In operation 115, the first electronic device (sender) 110 may transmit a Go negotiation request message to the second electronic device (receiver) 120, in operation 117, the second electronic device (receiver) 120 may transmit a Go negotiation response message to the first electronic device (sender) 110 and, in operation 119, the first electronic device (sender) 110 may transmit a Go negotiation identify message to the second electronic device (receiver) 120.

In operation 121, the first electronic device (sender) 110 may transmit a P2P probe request message to the second electronic device (receiver) 120 and, in operation 123, the second electronic device (receiver) 120 may transmit a P2P probe response message to the first electronic device (sender) 110.

In operation 125, the first electronic device (sender) 110 and the second electronic device (receiver) 120 may perform a P2P authentication procedure by exchanging messages and, in operation 127, the first electronic device (sender) 110 and the second electronic device (receiver) 120 may perform a P2P association procedure by exchanging messages. In operation 129, the first electronic device (sender) 110 and the second electronic device (receiver) 120 may perform a 4 handshake (EAPOL) procedure and, in operation 131, establish a P2P connection.

After the BLE communication, when the first electronic device (sender) 110 and the second electronic device (receiver) 120 determine to perform a Wi-Fi aware (or NAN) connection, in operation 133, the first electronic device (sender) 110 may transmit a discovery beacon message to the second electronic device (receiver) 120 for synchronization. In operation 135, the first electronic device (sender) 110 may transmit the discovery beacon message back to the second electronic device (receiver) 120. In operation 137, the first electronic device (sender) 110 may transmit a synchronization beacon message to the second electronic device (receiver) 120.

In operation 139, the first electronic device (sender) 110 may transmit a service discovery frame (SDF) publish message to the second electronic device (receiver) 120 for service discovery and, in operation 141, the second electronic device (receiver) 120 may transmit an SDF follow-up message to the first electronic device (sender) 110.

In operation 143, the first electronic device (sender) 110 may receive a data path request message from the second electronic device (receiver) 120 for NAN data path (NDP) setup and, in operation 145, the second electronic device (receiver) 120 may receive a data path response message from the first electronic device (sender) 110. In operation 147, the first electronic device (sender) 110 may receive the data path confirm message from the second electronic device (receiver) 120 and, in operation 149, the second electronic device (receiver) 120 may receive the data path key installation message from the first electronic device (sender) 110. In operation 151, the first electronic device (sender) 110 and the second electronic device (receiver) 120 may establish a NAN connection.

For example, operations 101 to 105 for BLE communication (discovery/connection/authentication) may take 3.7 seconds. For example, the BLE operations 101 to 105 and procedures 107 to 131 for the P2P connection (Wi-Fi Direct) may take 7.2 seconds. For example, the BLE operations 101 to 105 and the procedure 133 to 151 for the NAN connection (Wi-Fi NAN) may take 6 seconds.

For example, operations 107 to 109 for a P2P connection (Wi-Fi Direct) may take 2 seconds, and operations 111 to 131 may take 1.5 seconds. For example, operations 133 to 137 for the NAN connection (Wi-Fi NAN) may take 1 second, operations 139 to 141 may take 0.5 seconds, and operations 143 to 151 may take 0.8 seconds.

After the BLE communication, a large delay may occur until a P2P connection (Wi-Fi Direct) or an NAN connection (Wi-Fi NAN) between the first electronic device (sender) 110 and the second electronic device (receiver) 120 is established.

The disclosure proposes a method for reducing the delay in setting up a NAN connection (Wi-Fi NAN) between the first electronic device (sender) 110 and the second electronic device (receiver) 120 after BLE communication. According to an embodiment, the disclosure proposes a method for reducing redundant discovery procedures in BLE communication and NAN connection (Wi-Fi NAN) to reduce NAN connection (Wi-Fi NAN) setup delay.

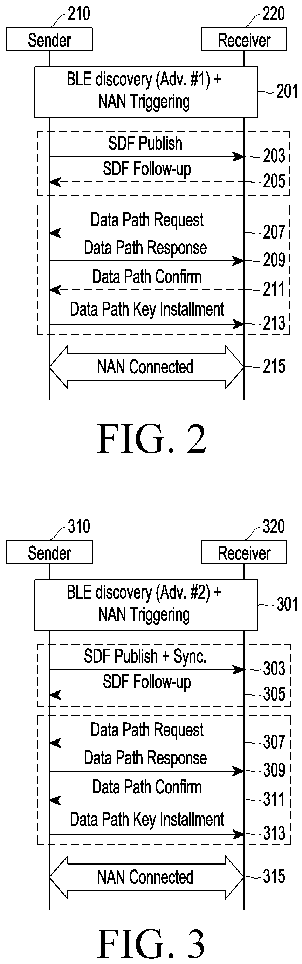

FIG. 2 illustrates an example of an NAN connection (Wi-Fi NAN) setup procedure between electronic devices according to an embodiment of the disclosure.

Referring to FIG. 2, the first electronic device (sender) 210 and the second electronic device (receiver) 220 may perform adaptive channel selection in an initial step to reduce the time required for BLE communication (discovery/connection/authentication) and NAN connection (Wi-Fi NAN) setup.

In operation 201, the first electronic device (sender) 210 and the second electronic device (receiver) 220 may perform BLE discovery and NAN triggering together. According to an embodiment, a NAN synchronization beacon may be included in a BLE advertisement payload. For example, operation 201 may take 0.56 seconds. In the disclosure, NAN triggering may mean an operation in which the first electronic device 210 and the second electronic device 220 are configured to operate on the NAN channel.

According to an embodiment, there may be no sleep period for each of the first electronic device 210 and the second electronic device 220 until NAN connection setup after NAN triggering (similar to NAN instant communication).

In operation 203, the first electronic device (sender) 210 may transmit a service discovery frame (SDF) publish message to the second electronic device (receiver) 220 for service discovery and, in operation 205, the second electronic device (receiver) 220 may transmit an SDF follow-up message to the first electronic device (sender) 210. For example, operations 203 to 205 may take 0.5 seconds.

In operation 207, the first electronic device (sender) 210 may receive a data path request message from the second electronic device (receiver) 220 for NAN data path (NDP) setup and, in operation 209, the second electronic device (receiver) 220 may receive a data path response message from the first electronic device (sender) 210. In operation 211, the first electronic device (sender) 210 may receive the data path confirm message from the second electronic device (receiver) 220 and, in operation 213, the second electronic device (receiver) 220 may receive the data path key installation message from the first electronic device (sender) 210. In operation 215, the first electronic device (sender) 210 and the second electronic device (receiver) 220 may establish a NAN connection. For example, operations 207 to 213 may take 0.8 seconds.

For example, a total of 1.86 seconds may be required for the NAN connection (Wi-Fi NAN) between the first electronic device 210 and the second receiver 220.

FIG. 3 illustrates another example of an NAN connection (Wi-Fi NAN) setup procedure between electronic devices according to an embodiment of the disclosure.

Referring to FIG. 3, the first electronic device 310 and the second electronic device (receiver) 320 may perform adaptive channel selection in an initial step to reduce the time required for BLE communication (discovery/connection/authentication) and NAN connection (Wi-Fi NAN) setup.

In operation 301, the first electronic device (sender) 310 and the second electronic device (receiver) 320 may perform BLE discovery and NAN triggering together. According to an embodiment, a NAN synchronization beacon may be included in a BLE advertisement payload. For example, operation 301 may take 0.56 seconds. According to an embodiment, there may be no sleep period for each of the first electronic device 310 and the second electronic device 320 until NAN connection setup after NAN triggering (similar to NAN instant communication).

In operation 303, the first electronic device (sender) 310 may transmit a service discovery frame (SDF) publish message and piggyback NAN synchronization beacon to the second electronic device (receiver) 320 for service discovery and, in operation 305, the second electronic device (receiver) 320 may transmit an SDF follow-up message to the first electronic device (sender) 310. For example, operations 303 to 305 may take 0.5 seconds.

In operation 307, the first electronic device (sender) 310 may receive a data path request message from the second electronic device (receiver) 320 for NAN data path (NDP) setup and, in operation 309, the second electronic device (receiver) 320 may receive a data path response message from the first electronic device (sender) 310. In operation 311, the first electronic device (sender) 310 may receive the data path confirm message from the second electronic device (receiver) 320 and, in operation 313, the second electronic device (receiver) 320 may receive the data path key installation message from the first electronic device (sender) 310. In operation 315, the first electronic device (sender) 310 and the second electronic device (receiver) 320 may establish a NAN connection. For example, operations 307 to 313 may take 0.8 seconds.

For example, a total of 1.86 seconds may be required for the NAN connection (Wi-Fi NAN) between the first electronic device 310 and the second receiver 320.

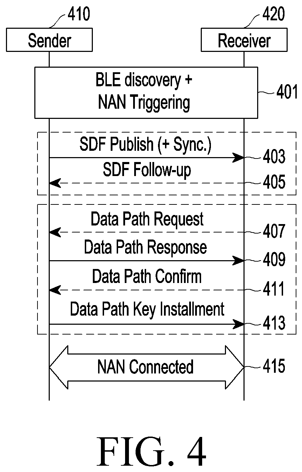

FIG. 4 illustrates another example of an NAN connection (Wi-Fi NAN) setup procedure between electronic devices according to an embodiment of the disclosure.

Referring to FIG. 4, the first electronic device (sender) 410 and the second electronic device (receiver) 420 may perform adaptive channel selection in an initial step to reduce the time required for BLE communication (discovery/connection/authentication) and NAN connection (Wi-Fi NAN) setup.

According to an embodiment, the first electronic device (sender) 410 and/or the second electronic device (receiver) 420 may reduce the time required for the NAN connection (Wi-Fi NAN) setup by optimizing at least one parameter out of the discovery window (DW) for the NAN discovery and the interval for the DW. According to an embodiment, the first electronic device (sender) 410 and/or the second electronic device (receiver) 420 may reduce the interval for DW and/or DW for NAN discovery, thereby reducing the time required for setting up a NAN connection (Wi-Fi NAN).

In operation 401, the first electronic device (sender) 410 and the second electronic device (receiver) 420 may perform BLE discovery and NAN triggering together. According to an embodiment, a NAN synchronization beacon may be included in a BLE advertisement payload. For example, operation 401 may take 0.56 seconds. According to an embodiment, there may be no sleep period for each of the first electronic device 410 and the second electronic device 420 until NAN connection setup after NAN triggering (similar to NAN instant communication).

In operation 403, the first electronic device (sender) 410 may transmit a service discovery frame (SDF) publish message and piggyback NAN synchronization beacon to the second electronic device (receiver) 420 for service discovery and, in operation 405, the second electronic device (receiver) 420 may transmit an SDF follow-up message to the first electronic device (sender) 410. According to an embodiment, the time required for operations 403 and 405 may be reduced based on parameter optimization. For example, operations 403 to 405 may take 0.4 seconds.

In operation 407, the first electronic device (sender) 410 may receive a data path request message from the second electronic device (receiver) 420 for NAN data path (NDP) setup and, in operation 409, the second electronic device (receiver) 420 may receive a data path response message from the first electronic device (sender) 410. In operation 411, the first electronic device (sender) 410 may receive the data path confirm message from the second electronic device (receiver) 420 and, in operation 413, the second electronic device (receiver) 420 may receive the data path key installation message from the first electronic device (sender) 410. In operation 415, the first electronic device (sender) 410 and the second electronic device (receiver) 420 may establish a NAN connection. According to an embodiment, the time required for operations 407 to 413 may be reduced based on parameter optimization. For example, operations 407 to 413 may take 0.64 seconds.

For example, a total of 1.5 seconds may be required for the NAN connection (Wi-Fi NAN) between the first electronic device 410 and the second receiver 420.

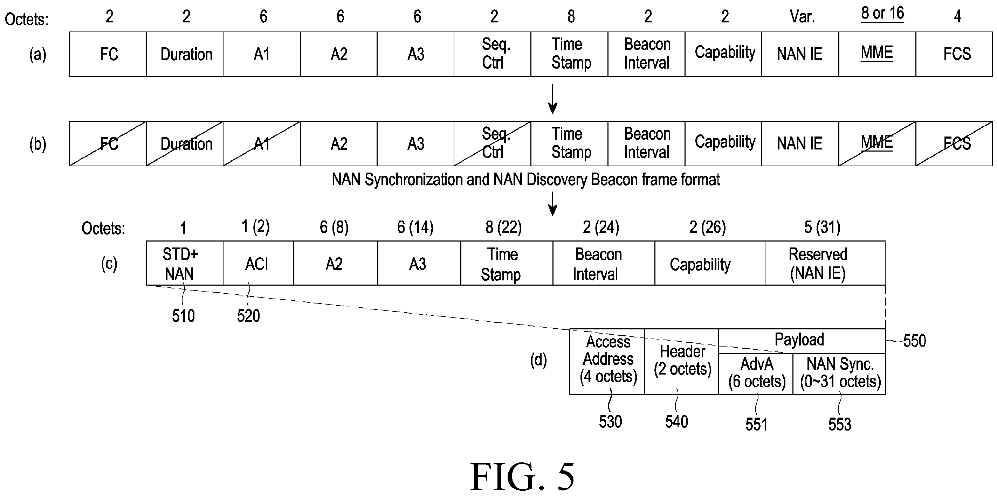

FIG. 5 illustrates an example of a BLE advertisement message including a NAN synchronization frame format according to an embodiment of the disclosure.

FIG. 5(a) to FIG. 5(c) illustrate the NAN synchronization frame format optimization process.

Referring to FIG. 5(a) and FIG. 5(b), the frame control (FC) field, the duration field, the A1 field (broadcast address), the seq.ctrl (sequence control) field, the management message integrity check (MIC) element (MME) field, and the frame check sum (FCS) field, which are unnecessary fields in the frame format, may be removed and/or replaced for NAN synchronization frame format optimization. For NAN synchronization frame format optimization, the frame format may include at least one of the necessary fields, such as an A2 field (tx Wi-Fi MAC address), an A3 field (NAN cluster ID), a time stamp field, a beacon interval, a capability field, and NAN information elements (IE).

Referring to FIG. 5(b) and FIG. 5(c), the optimized NAN synchronization frame format may include an STD+NAN field 510 and an adaptive channel index (ACI) field 520 for identifying the standard (STD) and/or indicating the role of the FC in addition to the necessary fields selected in FIG. 5(b).

The STD+NAN field 510 may be a field for identifying a packet type according to an embodiment of the disclosure that is different from the legacy method. For example, if the STD+NAN field 510 is "0", it may indicate a legacy P2P packet type; if the STD+NAN field 510 is "1", it may indicate a legacy WI-FI aware packet type; and if the STD+NAN field 510 is "2", it may indicate a packet type according to an embodiment of the disclosure.

The ACI field 520 may be a channel index for preoccupying a channel that is not occupied for interference avoidance with other channels. For example, the ACI field may not be fixed to channel 6 (Ch. 6).

FIG. 5(d) illustrates a BLE advertisement message (or BLE advertisement packet) including a NAN synchronization frame format 553. The BLE advertisement message may include an access address field 530, a header field 540, and a payload field 550. The payload field 550 may include an NAN synchronization frame format 553 optimized through FIG. 5(a) to FIG. 5(c), and an adjustment field (AdvA) 551. Herein, AdvA stands for advertiser address, which may be the address of an electronic device (sender) that transmits a BLE advertisement packet.

According to an embodiment, when the electronic device receives the BLE advertisement message (or BLE advertisement packet) of FIG. 5(d), at least one of neighbor discovery, NAN operating channel identification, and synchronization may be performed. According to an embodiment, if the payload size of the BLE advertisement message (or BLE advertisement packet) of FIG. 5(d) is insufficient, the electronic device may perform active scanning.

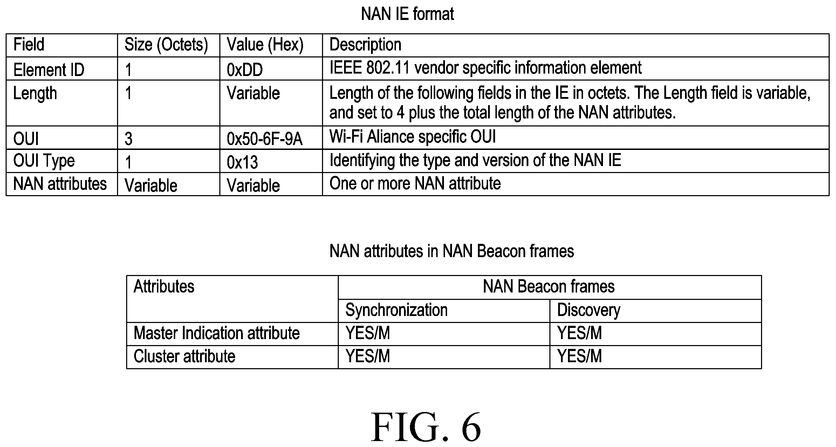

FIG. 6 illustrates a NAN IE format and NAN attributes included in NAN beacon frames, respectively, according to an embodiment of the disclosure.

The NAN IE format may be included in, e.g., the optimized NAN synchronization frame format illustrated in FIG. 5(c). Referring to FIG. 6, the NAN IE format may include an Element ID field, a Length field, an organizationally unique identifier (OuI) field, an OUI type field, and NAN attributes. The Element ID field indicates the IEEE 802.11 vendor specific information element. The Length field may indicate the lengths of fields in the NAN IE in octet units. The OuI field indicates the Wi-Fi Alliance specific OUI, and the OUI type field identifies the type and version of the NAN IE. The NAN attributes indicates one or more NAN attributes.

Referring to FIG. 6, the NAN attributes included in NAN beacon frames may include a Master Indication attribute field and a cluster attribute field.

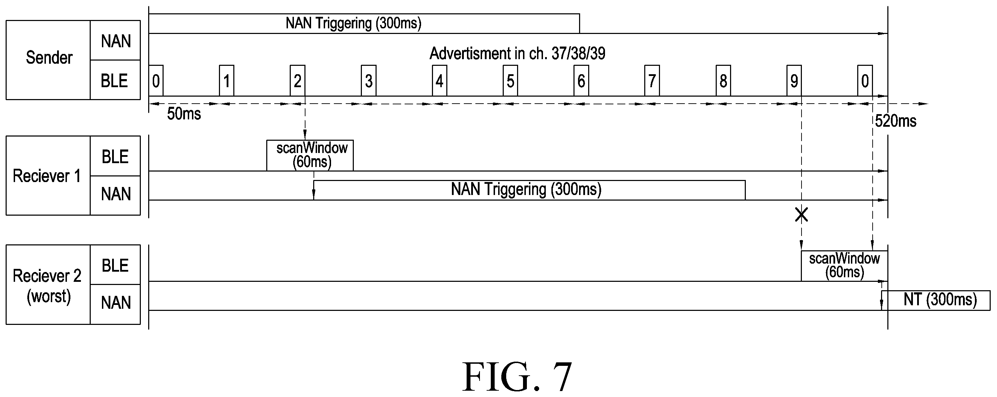

FIG. 7 illustrates an example for describing BLE discovery and NAN triggering operations according to an embodiment of the disclosure.

Referring to FIG. 7, the first electronic device (sender), the second electronic device (receiver) 1, and the third electronic device (receiver) 2 may perform BLE discovery and/or NAN triggering operations.

In FIG. 7, the BLE advertising interval of the first electronic device (sender) may be set to, e.g., 50 ms, and the BLE advertising message may be transmitted on, e.g., channels 37, 38, and 39. NAN triggering for each electronic device may be performed for, e.g., 300 ms. For the second electronic device (receiver) 1 and the third electronic device (receiver) 2, e.g., a scan window scan-

Window for receiving a BLE message may be set during a 60 ms time interval. For example, a scan interval for transmitting/receiving BLE messages may be set to 520 ms for each of the first electronic device (sender), the second electronic device (receiver1), and the third electronic device (receiver 2).

The first electronic device (sender) may transmit a BLE advertising message at each preset interval and perform an NAN triggering operation. The first electronic device (sender) may transmit 11 BLE advertising messages 0 to 9, 0 during the scan interval. For example, the first electronic device (sender) may transmit a BLE advertising message 0 and transmit a BLE advertising message 1 after a preset interval (e.g., 50 ms).

The second electronic device (receiver) 1 and the third electronic device (receiver) 2 may receive a BLE advertising message transmitted by the first electronic device (sender) in a scan window scanWindow, which is a time interval set for receiving BLE.

The second electronic device (receiver) 1 may receive the BLE advertising message 2 transmitted by the first electronic device (sender) in the scan window scanWindow and perform an NAN triggering operation.

The second electronic device (receiver) 1 may not receive the BLE advertising message 9 transmitted by the first electronic device (sender), but may receive the BLE advertising message 0 transmitted by the first electronic device (sender) in the scan window scanWindow. The second electronic device (receiver) 1 may perform an NAN triggering operation after receiving the BLE advertising message 0.

For example, in the work case scenario, a delay of 800 ms may occur in BLE discovery and NAN triggering operations. According to an embodiment, if the electronic device does not discover another electronic device, re-discovery may be performed based on user interaction.

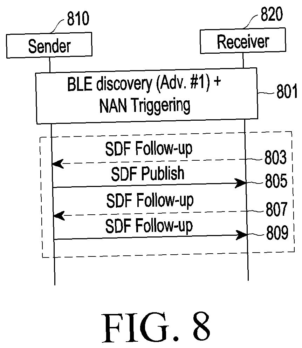

FIG. 8 illustrates another example of an NAN connection (Wi-Fi NAN) setup procedure between electronic devices according to an embodiment of the disclosure.

Referring to FIG. 8, in operation 801, the first electronic device (sender) 810 and the second electronic device (receiver) 820 may perform BLE discovery and NAN triggering together. According to an embodiment, a NAN synchronization beacon may be included in the BLE advertisement payload. For example, operation 801 may take 0.56 seconds.

In operation 803, the first electronic device (sender) 810 may receive a service discovery frame (SDF) subscribe message for service discovery from the second electronic device (receiver) 820. In operation 805, the first electronic device (sender) 810 may transmit a service discovery frame (SDF) publish message to the second electronic device (receiver) 820 for service discovery. In operation 807, the second electronic device (receiver) 820 may transmit an SDF follow-up message to the first electronic device (sender) 810. In operation 809, the second electronic device (receiver) 820 may receive an SDF follow-up message from the first electronic device (sender) 810. For example, operation 803 to 809 may take 0.4 seconds.

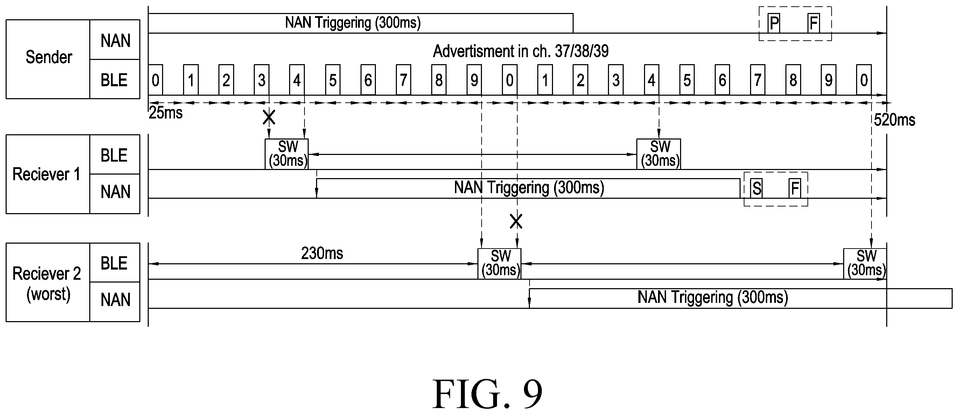

FIG. 9 illustrates another example for describing BLE discovery and NAN triggering operations according to an embodiment of the disclosure.

Referring to FIG. 9, the first electronic device (sender), the second electronic device (receiver) 1, and the third electronic device (receiver) 2 may perform BLE discovery and/or NAN triggering operations.

In FIG. 9, the BLE advertising interval of the first electronic device (sender) may be set to, e.g., 25 ms, and the BLE advertising message may be transmitted on, e.g., channels 37, 38, and 39. NAN triggering for each electronic device may be performed for, e.g., 300 ms. For the second electronic device (receiver) 1 and the third electronic device (receiver) 2, e.g., a scan window scanWindow for receiving a BLE message may be set during a 30 ms time interval. For example, a scan interval for transmitting/receiving BLE messages may be set to 260 ms for each of the first electronic device (sender), the second electronic device (receiver1), and the third electronic device (receiver 2). The scan window scanWindow and the scan interval illustrated in FIG. 9 may be set to be shorter than those in the embodiment illustrated in FIG. 7.

The first electronic device (sender) may transmit a BLE advertising message at each preset interval and perform an NAN triggering operation. The first electronic device (sender) may transmit 11 BLE advertising messages 0 to 9, 0 during the scan interval. For example, the first electronic device (sender) may transmit a BLE advertising message 0 and transmit a BLE advertising message 1 after a preset interval (e.g., 50 ms).

The second electronic device (receiver) 1 and the third electronic device (receiver) 2 may receive a BLE advertising message transmitted by the first electronic device (sender) in a scan window scanWindow, which is a time interval set for receiving BLE.

The second electronic device (receiver) 1 may not receive the BLE advertising message 3 transmitted by the first electronic device (sender) in the scan window scanWindow in the first scan interval, but may receive the BLE advertising message 4 transmitted by the first electronic device (sender) in the scan window scanWindow, and then perform a NAN triggering operation.

The second electronic device (receiver) 1 may receive the BLE advertising message 4 transmitted by the first electronic device (sender) in the scan window scanWindow in the second scan interval. In this case, the second electronic device (receiver 1) may still be performing the NAN triggering operation. According to an embodiment, the second electronic device (receiver) 1 may transmit an SDF subscribe message to the first electronic device (sender) in order to request an SDF publish message for service discovery after the NAN triggering operation is completed.

The third electronic device (receiver) 2 may receive the BLE advertising message 0 transmitted by the first electronic device (sender) in the scan window scanWindow in the second scan interval. In this case, the third electronic device (receiver) 2 may still be performing the NAN triggering operation.

The second electronic device (receiver) 1 may transmit an SDF subscribe message S for service discovery to the first electronic device (sender) after the NAN triggering operation. The first electronic device (sender) may transmit the SDF publish message P to the second electronic device (receiver) 1 in the SDF subscribe message S.

The second electronic device (receiver) 1 may transmit the SDF follow-up message F to the first electronic device (sender). The first electronic device (sender) may transmit the SDF follow-up message F to the second electronic device (receiver) 1 in response to the SDF follow-up message F.

For example, in the worst case scenario, a delay of 560 ms may occur in the BLE discovery and NAN triggering operations. According to an embodiment, if the electronic device does not discover another electronic device, re-discovery may be performed based on user interaction.

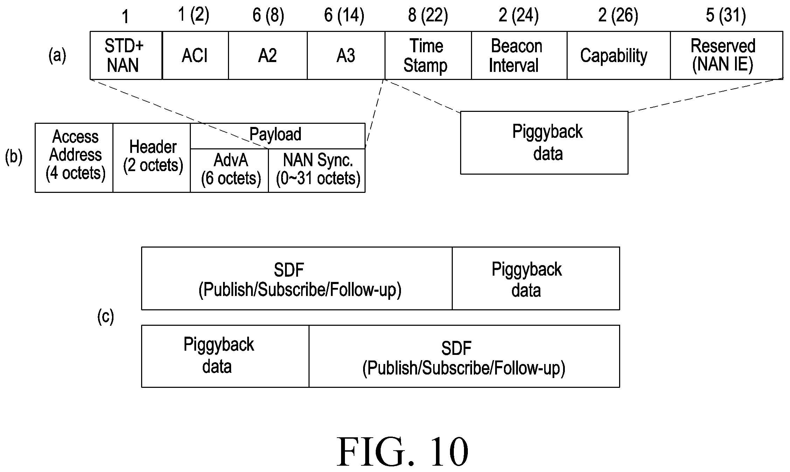

FIG. 10 illustrates an example of a NAN service discovery frame (SDF) including a piggyback NAN synchronization frame format according to an embodiment of the disclosure.

FIG. 10(a) and FIG. 10(b) illustrate the NAN synchronization frame format and piggyback data.

Referring to FIG. 10(a) and FIG. 10(b), the NAN synchronization frame format may include an STD+NAN field for identifying the standard (STD) and/or indicating the role of the FC, an adaptive channel index (ACI) field, an A2 field (tx Wi-Fi MAC address), and an A3 field (NAN cluster ID). The piggyback NAN synchronization frame format may include at least one of a time stamp field, a beacon interval, a capability field, and NAN information elements (IE).

The NAN synchronization frame format may be included in the payload in the NAN service discovery frame (SDF). The NAN service discovery frame (SDF) may include an Access Address field, a header field, and a payload field. The payload field may include an NAN synchronization frame format and an advertisement field.

The NAN service discovery frame (SDF) is a vendor-specific public action frame and may be for a public/subscribe/follow-up message for service discovery.

The maximum MAC protocol data (MMPDU) size may be much larger than the sum of NAN publish/subscription/follow-up (SDF) and NAN synchronization MAC protocol data (MPDU). In this case, overlapping fields such as OUI and OUI Type may be removed, and essential fields may be removed from NAN Sync. For example, the master indication attribute may be included in the protocol (SDF Publish transport == master).

Referring to FIG. 10(c), according to an embodiment, a piggyback NAN synchronization frame format may be configured after the NAN service discovery frame (SDF). According to an embodiment, an NAN service discovery frame (SDF) may be configured after the piggyback NAN synchronization frame format.

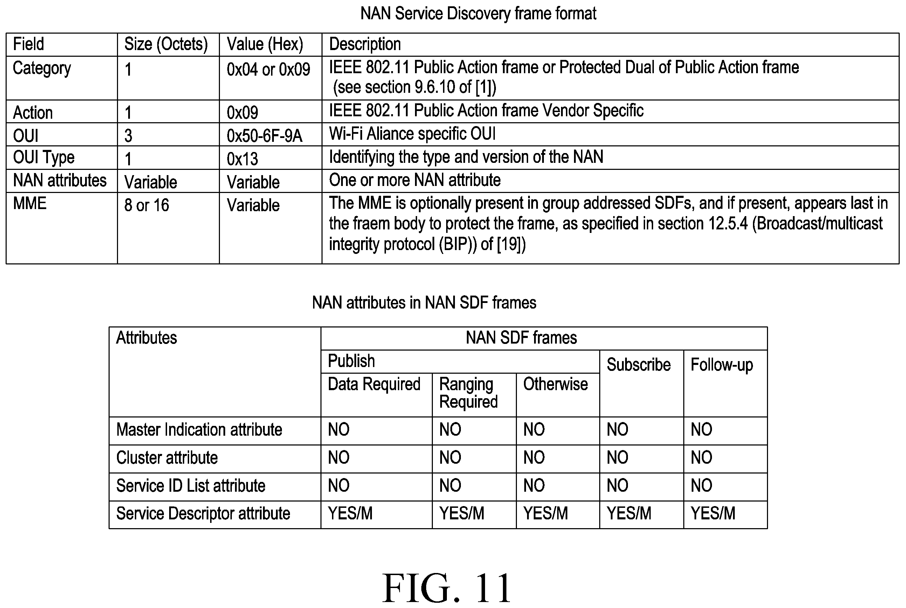

FIG. 11 illustrates a NAN SDF format and NAN attributes according to an embodiment of the disclosure.

Referring to FIG. 11, the NAN SDF format may include a Category field, an Action field, an Oui field, an OUI type field, a NAN attributes field, and an MME field. The Category field indicates IEEE 802.11 public action frame or protected dual of public action frame. The Action field indicates IEEE 802.11 public action frame vendor specific. The Oui field indicates the Wi-Fi Alliance specific OUI, and the OUI type field identifies the type and version of the NAN IE. The NAN attributes indicates one or more NAN attributes. The MME field may be present optically in a group addressed to SDFs, and may appear at the end of the frame body to protect the frame.

Referring to FIG. 11, the NAN attributes included in NAN beacon frames may include a Master Indication attribute field, a cluster attribute field, a service ID list attribute field, and a service descriptor attribute field.

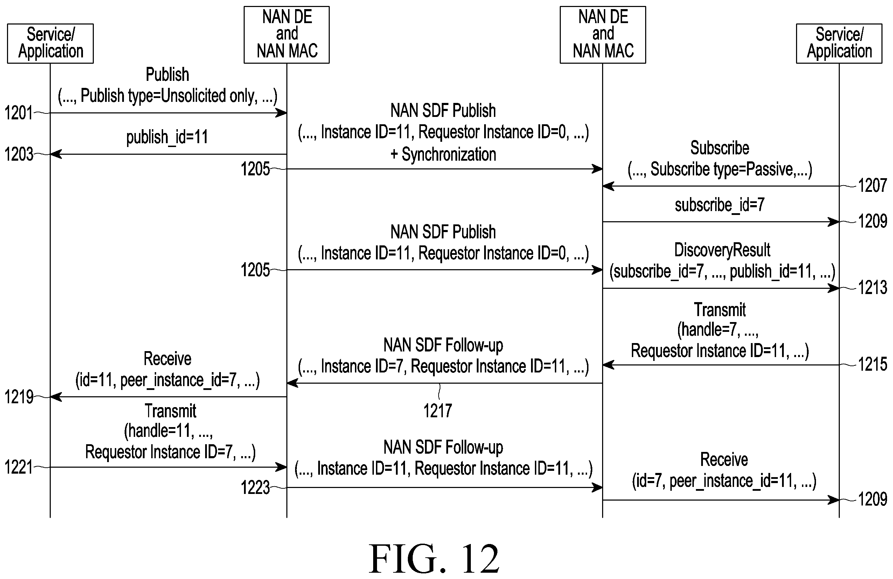

FIG. 12 illustrates an example illustrating a process of piggybacking a NAN synchronization frame format to a NAN SDF Publish message, according to an embodiment of the disclosure.

Referring to FIG. 12, in operation 1201, a first service/application may transmit a publish message for service discovery publishing to a first electronic device NAN DE and NAN MAC. According to an embodiment, the pull type in the publish message is set to unsolicited only, and the first electronic device NAN DE and NAN MAC may transmit the SDF publish message without a request from the second electronic device NAN DE and NAN MAC.

In operation 1203, the first electronic device NAN DE and NAN MAC may transmit a publish id (e.g., publish id=11) to the first service/application.

In operation 1205, the first electronic device NAN DE and NAN MAC may piggyback the NAN synchronization frame to the NAN SDF Publish message and transmit the same to the second electronic device NAN DE and NAN MAC. According to an embodiment, an Instance ID (e.g., 11) and/or a requester instance ID (e.g., 0) may be set in the NAN SDF Publish message.

In operation 1207, the second service/application may transmit a subscribe message with a subscription type (e.g., passive) set, to the second electronic device NAN DE and NAN MAC. In operation 1209, the second electronic device NAN DE and NAN MAC may transmit the subscription id (e.g., 7) to the second service/application.

In operation 1211, the first electronic device NAN DE and NAN MAC may piggyback the NAN synchronization frame to the NAN SDF Publish message and transmit the same to the second electronic device NAN DE and NAN MAC. According to an embodiment, an Instance ID (e.g., 11) and/or a requester instance ID (e.g., 0) may be set in the NAN SDF Publish message.

In operation 1213, the second electronic device NAN DE and NAN MAC may transmit a discovery result message with a subscription ID (e.g., 7) and a publish ID (e.g., 11) set, to the second service/application. In operation 1215, the second service/application may transmit a Transit message with the handle (e.g., 7) and/or requester instance ID (e.g., 11) set, to the second electronic device (NAND DE and NAN MAC).

In operation 1217, the second electronic device NAN DE and NAN MAC may transmit a NAN SDF Follow-up message with an Instance ID (e.g., 7) and/or a requester instance ID (e.g., 11) set, to the first electronic device NAN DE and NAN MAC.

In operation 1219, the first electronic device NAN DE and NAN MAC may transmit a received message with an id (e.g., 11) and/or a peer instance id (e.g., 7) set, to the first service/application.

In operation 1221, the first service/application may transmit a Transit message with the handle (e.g., 11) and/or requester instance ID (e.g., 7) set, to the first electronic device (NAND DE and NAN MAC).

In operation 1223, the first electronic device NAN DE and NAN MAC may transmit a NAN SDF Follow-up message with an Instance ID (e.g., 11) and/or a requester instance ID (e.g., 11) set, to the second electronic device NAN DE and NAN MAC.

In operation 1225, the second electronic device NAN DE and NAN MAC may transmit a received message with an id (e.g., 7) and/or a peer instance id (e.g., 11) set, to the second service/application.

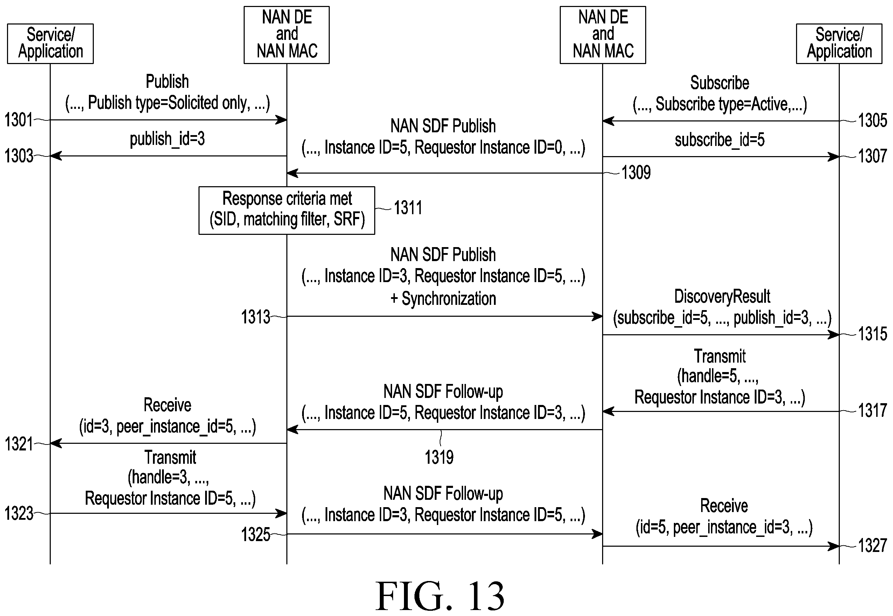

FIG. 13 illustrates another example illustrating a process of piggybacking a NAN synchronization frame format to a NAN SDF Publish message according to an embodiment of the disclosure.

Referring to FIG. 13, in operation 1301, the first service/application may transmit a publish message for service discovery publishing to the first electronic device NAN DE and NAN MAC. According to an embodiment, the pull type in the publish message is set to solicited only, and the first electronic device NAN DE and NAN MAC may transmit an SDF publish message when there is a subscribe request from the second electronic device NAN DE and NAN MAC.

In operation 1303, the first electronic device NAN DE and NAN MAC may transmit a publish id (e.g., publish id=3) to the first service/application.

In operation 1305, the second service/application may transmit a subscribe message with a subscription type (e.g., active) set, to the second electronic device NAN DE and NAN MAC. In operation 1307, the second electronic device NAN DE and NAN MAC may transmit the subscription id (e.g., 5) to the second service/application.

In operation 1309, the second electronic device NAN DE and NAN MAC may transmit a NAN SDF subscribe message with an Instance ID (e.g., 5) and/or a requester instance ID (e.g., 0) set, to the first electronic device NAN DE and NAN MAC.

In operation 1311, the first electronic device NAN DE and NAN MAC may determine whether the response criterion is met based on at least one of a service ID (SID), a matching filter, and a service response filter (SRF) to be used.

In operation 1313, the first electronic device NAN DE and NAN MAC may piggyback the NAN synchronization frame to the NAN SDF Publish message and transmit the same to the second electronic device NAN DE and NAN MAC. According to an embodiment, an Instance ID (e.g., 3) and/or a requester instance ID (e.g., 5) may be set in the NAN SDF Publish message.

In operation 1315, the second electronic device NAN DE and NAN MAC may transmit a discovery result message with a subscription ID (e.g., 5) and a publish ID (e.g., 3) set, to the second service/application. In operation 1317, the second service/application may transmit a Transit message with the handle (e.g., 5) and/or requester instance ID (e.g., 3) set, to the second electronic device (NAND DE and NAN MAC).

In operation 1319, the second electronic device NAN DE and NAN MAC may transmit a NAN SDF Follow-up message with an Instance ID (e.g., 5) and/or a requester instance ID (e.g., 3) set, to the first electronic device NAN DE and NAN MAC.

In operation 1321, the first electronic device NAN DE and NAN MAC may transmit a received message with an id (e.g., 3) and/or a peer instance id (e.g., 5) set, to the first service/application.

In operation 1323, the first service/application may transmit a Transit message with the handle (e.g., 3) and/or requester instance ID (e.g., 5) set, to the first electronic device (NAND DE and NAN MAC).

In operation 1325, the first electronic device NAN DE and NAN MAC may transmit a NAN SDF Follow-up message with an Instance ID (e.g., 3) and/or a requester instance ID (e.g., 5) set, to the second electronic device NAN DE and NAN MAC.

In operation 1327, the second electronic device NAN DE and NAN MAC may transmit a received message with an id (e.g., 5) and/or a peer instance id (e.g., 3) set, to the second service/application.

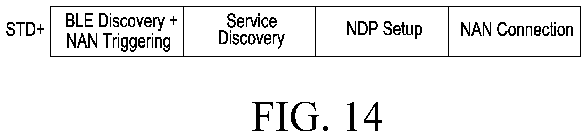

FIG. 14 is a view illustrating a NAN connection process between electronic devices according to an embodiment of the disclosure.

Referring to FIG. 14, a NAN connection process between electronic devices includes a BLE discovery and NAN triggering process, a service discovery process, a NAN data path (NDP) setup process, and a NAN connection.

The service discovery process may include a process of transmitting/receiving an SDF publish message and an SDF follow-up message for service discovery. The NDP setup process may include a process of transmitting/receiving at least one of a data path request message, a data path response message, a data path confirm message, and a data path key installment message.

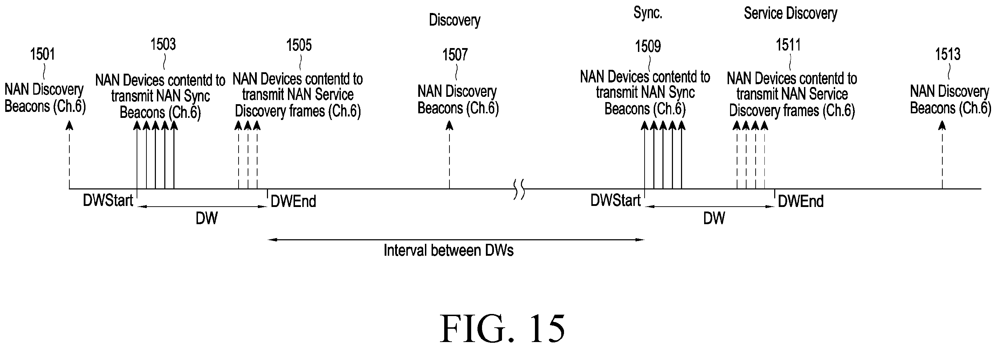

FIG. 15 is a view illustrating NAN discovery, synchronization, and service discovery according to an embodiment of the disclosure.

Referring to FIG. 15, in operation 1501, the electronic device may transmit NAN discovery beams on a set NAN operating channel (e.g., channel 6). In operation 1503, from the Discovery Window (DW) start point DWStart, a plurality of electronic devices may transmit or attempt to transmit NAN sync beacons on a set NAN operating channel (e.g., channel 6). In operation 1505, up to the discovery window (DW) end point (DWend), the plurality of electronic devices may transmit or attempt to transmit NAN SDFs on the set NAN operating channel (e.g., channel 6). According to an embodiment, an interval may be set between DWs.

In operation 1507, during NAN discovery, the electronic device may transmit NAN discovery beams on the set NAN operating channel (e.g., channel 6). In operation 1509, from the Discovery Window (DW) start point DWStart, a plurality of electronic devices may transmit or attempt to transmit NAN sync beacons on a set NAN operating channel (e.g., channel 6). In operation 1511, up to the discovery window (DW) end point (DWend), the plurality of electronic devices may transmit or attempt to transmit NAN SDFs on the set NAN operating channel (e.g., channel 6).

The legacy NAN (NAN discovery, synchronization, and/or service discovery) operating channel may be set to channel 6, and a 5 GHz frequency band may optionally be used.

In the disclosure, the electronic device may adaptively select a NAN operating channel. According to an embodiment, the electronic device may include the adaptively selected adaptive channel index (ACI) in the BLE advertisement message (or BLE advertisement packet) and the NAN SDF message and transmit the same to the external electronic device. According to an embodiment, one channel index may be selected from 2.4 GHz and 5 GHz.

According to an embodiment, the electronic device may select a channel having the highest channel capacity as the NAN operating channel. According to an embodiment, the electronic device may select a channel having the lowest channel utilization as the NAN operating channel. According to an embodiment, when selecting a NAN operating channel, the electronic device may comply with different regulations for the ISM band according to each country.

According to an embodiment, the electronic device may select the operating channel using at least one of the collected Wi-Fi beacon information (e.g., country information, time-out information, QoS of basic service set (QBSS), and received signal strength indicator (RSSI)). According to an embodiment, the electronic device may select the operating channel using the noise level of the adaptive frequency hopping (BLEAFH) channel index. According to an embodiment, the electronic device may select the operating channel based on an uniform random channel selection. According to an embodiment, the electronic device may select the operating channel using a combination of the above-described methods.

According to an embodiment, an adaptive channel index (ACI) may be set to 1 byte. According to an embodiment, the ACI may be initially transmitted through a BLE advertisement packet.

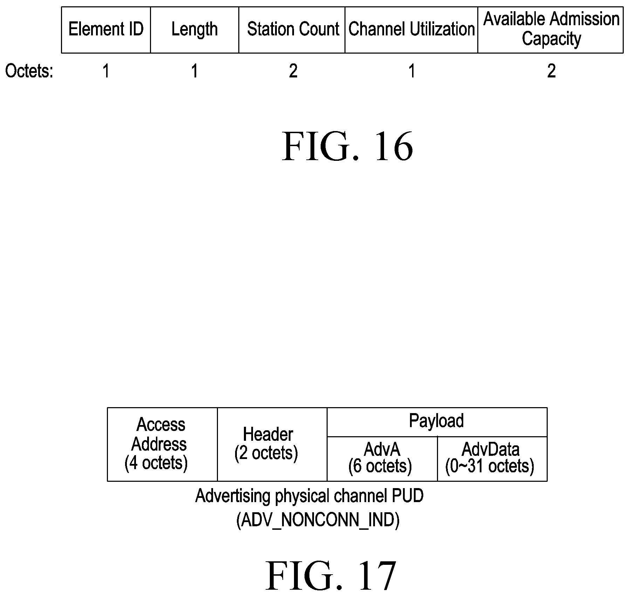

FIG. 16 illustrates a BSS load element format according to an embodiment of the disclosure. Referring to FIG. 16, a BSS load element format may include an Element ID field, a Length field, a Station Count field, a Channel Utilization field, and an Available Admission Capacity field. According to an embodiment, the BSS load element format may be used to estimate the state of the channel through CUs from several APs by utilizing the Channel Utilization (CU) value in the field.

FIG. 17 illustrates an advertising physical channel PDU according to an embodiment of the disclosure. Referring to FIG. 17, the Advertising physical channel PDU includes an Access Address field, a header field, and a Payload field. The Payload field includes an AdvA field and an AdvData field. According to an embodiment, AdvA indicates the address of the advertising device, and AdvData indicates the actual advertising data.

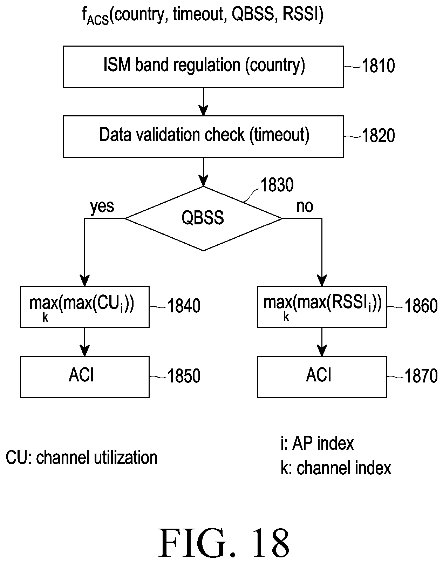

FIGS. 18, 19, and 20 are views illustrating an adaptive channel selection process according to an embodiment of the disclosure.

The electronic device may perform adaptive channel selection (ACS) to select an operating channel with better performance (connection delay, throughput) compared to using a preset channel (e.g. Ch. 6). According to an embodiment, the electronic device may minimize and/or remove channel switching after NAN triggering. According to an embodiment, when the electronic device performs ACS, additional channel scanning may not be performed (reuse of already collected data).

Referring to FIG. 18, the electronic device may set a function $f_{ACS}$ for an ACS. According to an embodiment, the $f_{ACS}$ may be determined based on at least one of country information, time-out information, QoS of basic service set (QBSS), and received signal strength indicator (RSSI).

In operation 1810, the electronic device may identify industrial scientific and medical (ISM) frequency band regulation based on country information for ACI selection. In operation 1820, the electronic device may identify data validation based on timeout information for ACI selection.

In operation 1830, the electronic device may identify the presence or absence of QoS of basic service set (or channel information) for ACI selection. When the electronic device includes QBSS (or channel information), in operations 1840 and 1850, the electronic device may select an ACI that meets Equation 1.

[Equation 1]

$$\max_{k}(\max(CU_i))$$

Here, CU is the channel utilization, i is the AP index, and k is the channel index.

When the electronic device does not include QBSS (or channel information), in operations 1860 and 1870, the electronic device may select an ACI that meets Equation 2.

[Equation 2]

$$\min_{k}(\max(RSSI_i))$$

Here, i is the AP index and k is the channel index.

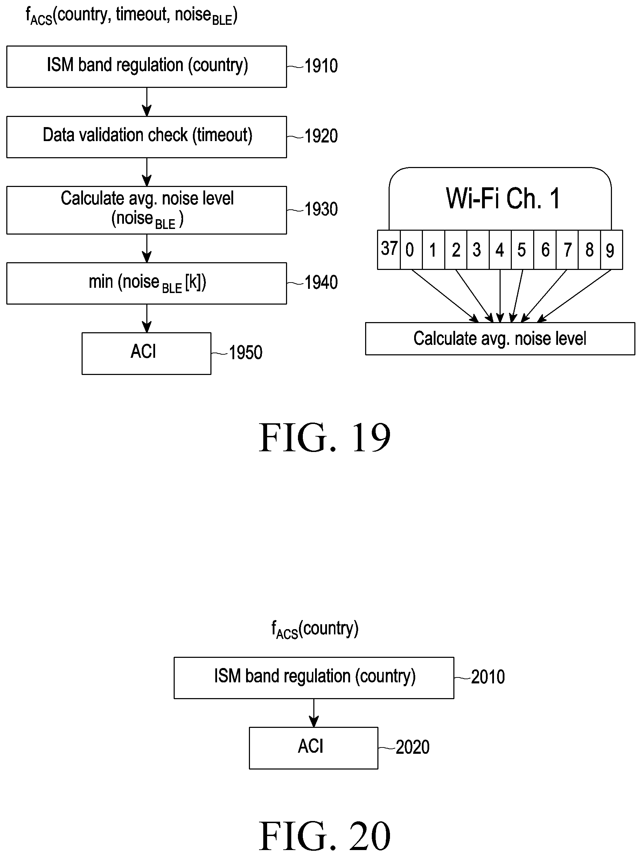

Referring to FIG. 19, the electronic device may set a function $f_{ACS}$ for an ACS. According to an embodiment, the $f_{ACS}$ may be determined based on at least one of country information, time-out information, and the average noise level $noise_{BLE}$ in the Wi-Fi channel.

In operation 1910, the electronic device may identify industrial scientific and medical (ISM) frequency band regulation based on country information for ACI selection. In operation 1920, the electronic device may identify data validation based on timeout information for ACI selection.

In operation 1930, the electronic device may calculate an average $noise_{BLE}$ of the noise levels in the Wi-Fi channel. In operations 1940 and 1950, the electronic device may select an ACI meeting Equation 3.

[Equation 3]

$$\min(noise_{BLE}[k])$$

Here, k is the channel index.

Referring to FIG. 20, the electronic device may set a function $f_{ACS}$ for an ACS. According to an embodiment, the $f_{ACS}$ may be determined based on country information.

In operation 2010, the electronic device may identify industrial scientific and medical (ISM) frequency band regulation based on national information. In operation 2020, the electronic device may select ACI based on the frequency band regulation.

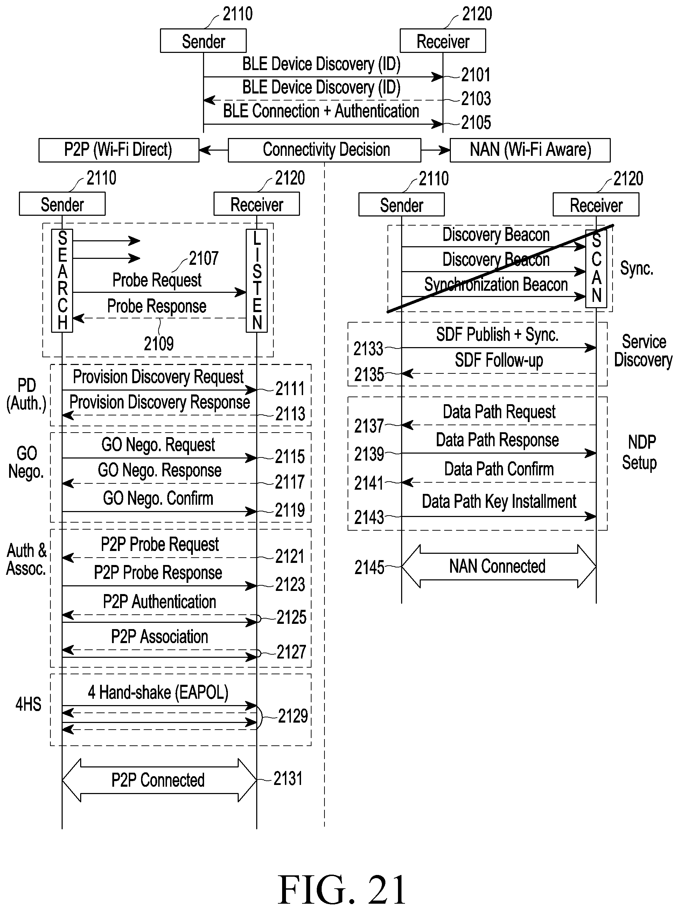

FIG. 21 is a view illustrating a communication setup procedure between electronic devices according to an embodiment of the disclosure.

Referring to FIG. 21, the first electronic device 2110 and the second electronic device 2120 may perform BLE discovery/connection/authentication therebetween through BLE communication. The first electronic device (sender) 2110 and the second electronic device (receiver) 2120 may determine which connection between Wi-Fi Direct (or P2P) and Wi-Fi aware (or NAN) will proceed after BLE communication.

In operation 2101, the first electronic device (sender) 2110 may transmit a BLE device discovery message including its ID to the second electronic device (receiver) 2120. In operation 2103, the second electronic device (receiver) 2120 may transmit a BLE device discovery message including its ID to the first electronic device (sender) 2110. In operation 2105, the first electronic device (sender) 2110 and the second electronic device (receiver) 2120 may perform BLE connection and authentication through at least one message exchange.

After the BLE communication, when the first electronic device (sender) 2110 and the second electronic device (receiver) 2120 determine to perform a Wi-Fi Direct (or P2P) connection, in operation 2107, the first electronic device (sender) 2110 may transmit a probe request message for search to the second electronic device 2120. In operation 2109, the second electronic device (receiver) 2120 may transmit a probe response message to the first electronic device (sender) 2110. In operation 2111, the first electronic device (sender) 2110 may transmit a provision discovery request message to the second electronic device (receiver) 2120 and, in operation 2113, the second electronic device (receiver) 2120 may transmit a provision discovery response message to the first electronic device (sender) 2110.

In operation 2115, the first electronic device (sender) 2110 may transmit a Go negotiation request message to the second electronic device (receiver) 2120, in operation 2117, the second electronic device (receiver) 120 may transmit a Go negotiation response message to the first electronic device (sender) 2110 and, in operation 2119, the first electronic device (sender) 2110 may transmit a Go negotiation identify message to the second electronic device (receiver) 2120.

In operation 2121, the first electronic device (sender) 2110 may transmit a P2P probe request message to the second electronic device (receiver) 2120 and, in operation 2123, the second electronic device (receiver) 2120 may transmit a P2P probe response message to the first electronic device (sender) 2110.

In operation 2125, the first electronic device (sender) 2110 and the second electronic device (receiver) 2120 may perform a P2P authentication procedure by exchanging messages and, in operation 2127, the first electronic device (sender) 2110 and the second electronic device (receiver) 2120 may perform a P2P association procedure by exchanging messages. In operation 2129, the first electronic device (sender) 2110 and the second electronic device (receiver) 2120 may perform a 4 hand-shake (EAPOL) procedure and, in operation 2131, establish a P2P connection.

After the BLE communication, when the first electronic device (sender) 110 and the second electronic device (receiver) 120 determine to perform Wi-Fi aware (or NAN) connection, in operation 2133, the first electronic device (sender) 2110 may transmit the service discovery frame (SDF) public message and NAN synchronization frame format to the second electronic device (receiver) 2120 for service discovery and, in operation 2135, the second electronic device (receiver) 2120 may transmit the SDF follow-up message to the first electronic device (sender) 2110. According to an embodiment, the NAN synchronization frame format may be the NAN synchronization frame format described with reference to FIG. 10. According to an embodiment, the NAN synchronization frame format may be piggybacked to the SDF publish message, and transmitted.

In operation 2137, the first electronic device (sender) 2110 may receive a data path request message from the second electronic device (receiver) 2120 for NAN data path (NDP) setup and, in operation 2139, the second electronic device (receiver) 2120 may receive a data path response message from the first electronic device (sender) 2110. In operation 2141, the first electronic device (sender) 2110 may receive the data path confirm message from the second electronic device (receiver) 2120 and, in operation 2143, the second electronic device (receiver) 2120 may receive the data path key installation message from the first electronic device (sender) 2110. In operation 2145, the first electronic device (sender) 2110 and the second electronic device (receiver) 2120 may establish a NAN connection.

According to an embodiment, the first electronic device (sender) 2110 and the second electronic device 2120 may perform NAN communication together with legacy P2P communication.

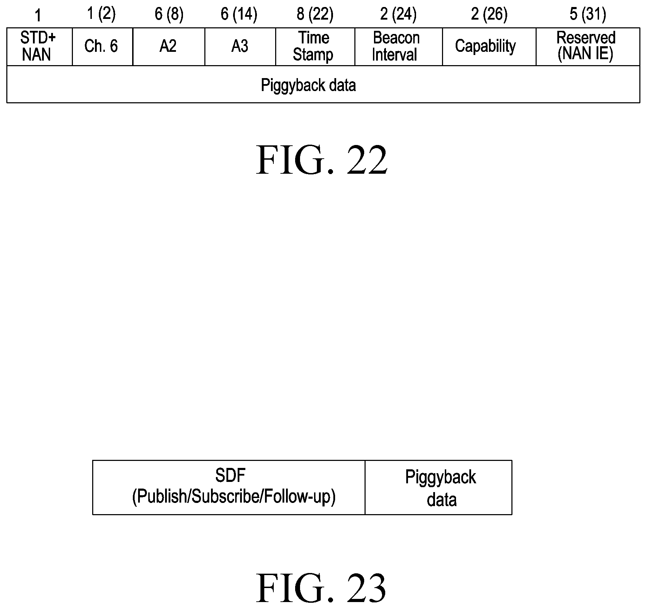

FIGS. 22 and 23 illustrate NAN SDF messages and piggyback data according to an embodiment of the disclosure.

Referring to FIG. 22, the NAN SDF message may include an STD+NAN field, a field indicating channel 6, an A2 field, an A3 field, a TimeStamp field, a beacon interval field, a capability field, and a reserved field (NAN IE). Referring to FIG. 23, piggyback data may be piggybacked to SDF messages (Public, Subscribe, and/or Follow-up message).

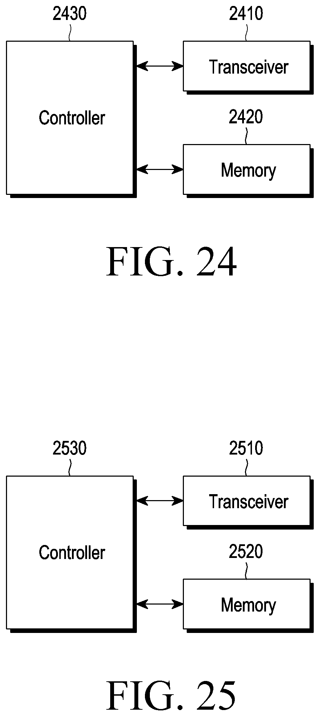

FIG. 24 is a view illustrating a structure of an electronic device (sender) according to an embodiment of the disclosure. The electronic device (sender) of FIG. 24 may be implemented as the electronic device or the first electronic device (sender) illustrated in FIGS. 1 to 21, 26A to 28C.

Referring to FIG. 24, the electronic device may include a transceiver 2410, a controller 2420, and a storage unit 2430. In the disclosure, the controller may be defined as a circuit or application-specific integrated circuit or at least one processor.

The transceiver 2410 may transmit and receive a signal to and from an external electronic device.

The controller 2420 may control the overall operation of the electronic device (sender) according to the embodiment proposed in the disclosure. For example, the controller 2420 may control inter-block signal flow to perform the operations according to the above-described flowchart. Specifically, the controller 2420 may control, e.g., the operation of the electronic device or the first electronic device (sender) illustrated in FIGS. 1 to 21, 26A to 28C.

The storage unit 2430 may store at least one of information transmitted/received via the transceiver 2410 and information generated via the controller 2420.

FIG. 25 is a view illustrating a structure of an electronic device according to an embodiment of the disclosure. The electronic device (receiver) of FIG. 25 may be implemented as the electronic device, the second electronic device (receiver), or the third electronic device (receiver) illustrated in FIGS. 1 to 21, 26A to 28C.

Referring to FIG. 25, the electronic device may include a transceiver 2510, a controller 2520, and a storage unit 2530. In the disclosure, the controller may be defined as a circuit, an application-specific integrated circuit, or at least one processor.

The transceiver 2510 may transmit and receive a signal to and from an external electronic device.

The controller 2520 may control the overall operation of the electronic device according to an embodiment. For example, the controller 2520 may control inter-block signal flow to perform the operations according to the above-described flowchart. Specifically, the controller 2520 may control, e.g., the operation of the electronic device, the second electronic device (receiver), or the third electronic device (receiver) illustrated in FIGS. 1 to 21, 26A to 28C.

The storage unit 2530 may store at least one of information transmitted/received via the transceiver 2510 and information generated via the controller 2520.

The BLE discovery procedure of the disclosure may include at least one of the following four procedures 1 to 4.

    1) discovery request
    2) discovery response
    3) discovery response identity
    4) command

According to an embodiment, the discovery request procedure may include an operation in which the first electronic device (sender) transmits the advertisement indication message ADV_IND to the second electronic device (receiver), an operation in which the first electronic device (sender) receives the scan request message SCAN_REQ from the second electronic device (receiver), and an operation in which the first electronic device (sender) transmits the scan response message SCAN_RESP to the second electronic device (receiver).

According to an embodiment, the service ID in the advertisement indication message ADV_IND and the scan response message SCAN_RESP during the discovery request procedure may be set to Ox01 (Quick Connect). According to an embodiment, the packet information in the advertisement indication message ADV_IND may be set to 0x08 (REQUEST) during the discovery request procedure.

According to an embodiment, the discovery response procedure may include an operation in which the second electronic device (receiver) transmits the advertisement indication message ADV_IND to the first electronic device (sender), an operation in which the second electronic device (receiver) receives the scan request message SCAN_REQ from the first electronic device (sender), and an operation in which the second electronic device (receiver) transmits the scan response message SCAN_RESP to the first electronic device (sender).

According to an embodiment, the service ID in the advertisement indication message ADV_IND and the scan response message SCAN_RESP during the discovery response procedure may be set to Ox13 (authentication). According to an embodiment, the fields 23 to 25 in the advertisement indication message ADV_IND during the discovery response procedure may be used for a packet type according to an embodiment of the disclosure.

According to an embodiment, the discovery response identity procedure may include an operation in which the second electronic device (receiver) transmits the advertisement indication message ADV_IND to the first electronic device (sender), an operation in which the second electronic device (receiver) receives the scan request message SCAN_REQ from the first electronic device (sender), and an operation in which the second electronic device (receiver) transmits the scan response message SCAN_RESP to the first electronic device (sender).

According to an embodiment, the service ID in the advertisement indication message ADV_IND and the scan response message SCAN_RESP may be set to Ox13 (authentication) during the discovery response identity procedure.

According to an embodiment, the command procedure may include an operation in which the second electronic device (receiver) transmits the advertisement indication message ADV_IND to the first electronic device (sender), an operation in which the second electronic device (receiver) receives the scan request message (SCAN_REQ) from the first electronic device (sender), and an operation in which the second electronic device (receiver) transmits the scan response message (SCAN_RESP) to the first electronic device (sender).

According to an embodiment, the service ID in the advertisement indication message ADV_IND and the scan response message SCAN_RESP during the command procedure may be set to Ox01 (Quick Connect).

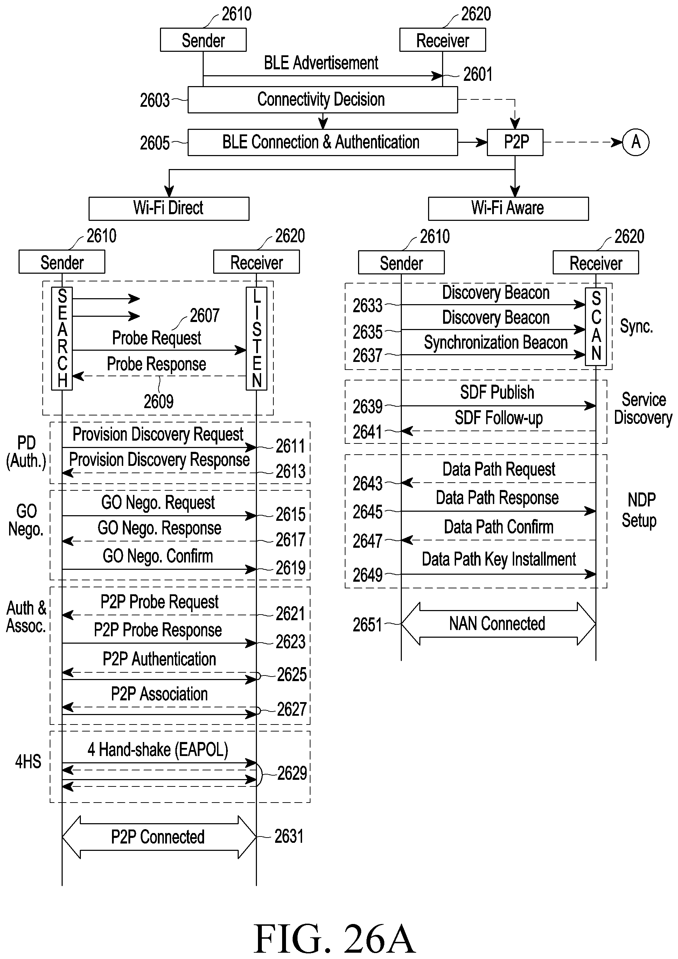

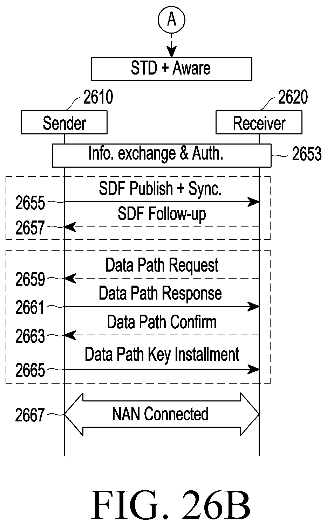

FIGS. 26A and 26B are views illustrating a communication setup procedure between electronic devices according to an embodiment of the disclosure.

Referring to FIGS. 26A and 26B, the first electronic device 2610 and the second electronic device 2620 may perform BLE discovery/connection/authentication therebetween through BLE communication. The first electronic device (sender) 2610 and the second electronic device (receiver) 2620 may determine which connection among legacy Wi-Fi Direct (or P2P), legacy Wi-Fi aware (or NAN), and Wi-Fi aware (or STD+aware) according to an embodiment of the disclosure will proceed after BLE communication.

In operation 2601, the first electronic device (sender) 2610 may transmit a BLE advertisement message to the second electronic device (receiver) 2620. In operation 2603, the first electronic device (sender) 2610 and/or the second electronic device (receiver) 2620 may determine what connection therebetween is to be established (connectivity decision). In operation 2605, the first electronic device (sender) 2610 and the second electronic device (receiver) 2620 may perform BLE connection and authentication through at least one message exchange.

After the BLE communication, when the first electronic device (sender) 2610 and the second electronic device (receiver) 2620 determine to proceed with the legacy Wi-Fi Direct (or P2P) connection, in operation 2607, the first electronic device (sender) 2610 may transmit a probe request message for search to the second electronic device (receiver) 2620. In operation 2609, the second electronic device (receiver) 120 may transmit a probe response message to the first electronic device (sender) 110. In operation 2611, the first electronic device (sender) 2610 may transmit a provision discovery request message to the second electronic device (receiver) 2620 and, in operation 2613, the second electronic device (receiver) 2620 may transmit a provision discovery response message to the first electronic device (sender) 2610.

In operation 2615, the first electronic device (sender) 2610 may transmit a Go negotiation request message to the second electronic device (receiver) 2620, in operation 2617, the second electronic device (receiver) 2620 may transmit a Go negotiation response message to the first electronic device (sender) 2610 and, in operation 2619, the first electronic device (sender) 2610 may transmit a Go negotiation identify message to the second electronic device (receiver) 2620.

In operation 2621, the first electronic device (sender) 2610 may transmit a P2P probe request message to the second electronic device (receiver) 2620 and, in operation 2623, the second electronic device (receiver) 2620 may transmit a P2P probe response message to the first electronic device (sender) 2610.

In operation 2625, the first electronic device (sender) 2610 and the second electronic device (receiver) 2620 may perform a P2P authentication procedure by exchanging messages and, in operation 2627, the first electronic device (sender) 2610 and the second electronic device (receiver) 2620 may perform a P2P association procedure by exchanging messages. In operation 2629, the first electronic device (sender) 2610 and the second electronic device (receiver) 2620 may perform a 4 hand-shake (EAPOL) procedure and, in operation 2631, establish a legacy P2P connection.

After the BLE communication, when the first electronic device (sender) 2610 and the second electronic device (receiver) 2620 determine to perform a legacy Wi-Fi aware (or NAN) connection, in operation 2633, the first electronic device (sender) 2610 may transmit a discovery beacon message to the second electronic device (receiver) 2620 for synchronization. In operation 2635, the first electronic device (sender) 2610 may transmit the discovery beacon message back to the second electronic device (receiver) 2620. In operation 2637, the first electronic device (sender) 2610 may transmit a synchronization beacon message to the second electronic device (receiver) 2620.

In operation 2639, the first electronic device (sender) 2610 may transmit a service discovery frame (SDF) publish message to the second electronic device (receiver) 2620 for service discovery and, in operation 2641, the second electronic device (receiver) 2620 may transmit an SDF follow-up message to the first electronic device (sender) 2610.

In operation 2643, the first electronic device (sender) 2610 may receive a data path request message from the second electronic device (receiver) 2620 for NAN data path (NDP) setup and, in operation 2645, the second electronic device (receiver) 2620 may receive a data path response message from the first electronic device (sender) 2610. In operation 2647, the first electronic device (sender) 2610 may receive the data path confirm message from the second electronic device (receiver) 2620 and, in operation 2649, the second electronic device (receiver) 2620 may receive the data path key installation message from the first electronic device (sender) 2610. In operation 2651, the first electronic device (sender) 2610 and the second electronic device (receiver) 2620 may establish a legacy NAN connection.

After the BLE communication, when the first electronic device (sender) 2610 and the second electronic device (receiver) 2620 determine to perform Wi-Fi aware (or STD+aware) connection according to an embodiment of the disclosure, in operation 2653, the first electronic device (sender) 2610 and the second electronic device (receiver) 2620 may perform information exchange and authentication. In operation 2655, the first electronic device (sender) 2610 may transmit a service discovery frame (SDF) public message and a piggyback NAN synchronization beacon for service discovery to the second electronic device (receiver) 2620. In operation 2657, the second electronic device (receiver) 2620 may transmit an SDF follow-up message to the first electronic device (sender) 2610.

In operation 2659, the first electronic device (sender) 2610 may receive a data path request message from the second electronic device (receiver) 2620 for NAN data path (NDP) setup and, in operation 2661, the second electronic device (receiver) 2620 may receive a data path response message from the first electronic device (sender) 2610. In operation 2663, the first electronic device (sender) 2610 may receive the data path confirm message from the second electronic device (receiver) 2620 and, in operation 2665, the second electronic device (receiver) 2620 may receive the data path key installation message from the first electronic device (sender) 2610. In operation 2667, the first electronic device (sender) 2610 and the second electronic device (receiver) 2620 may establish a NAN connection.

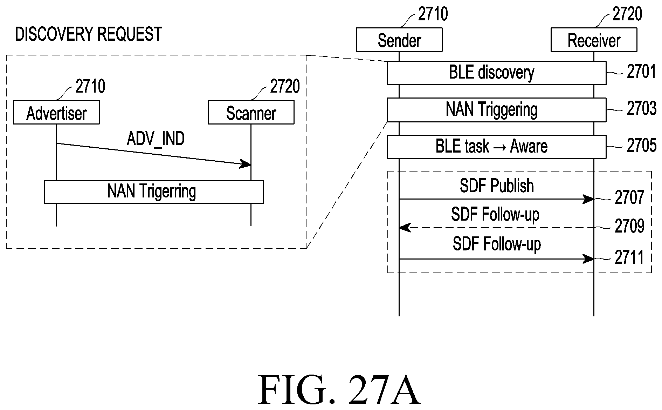

FIG. 27A illustrates an example of an NAN connection (Wi-Fi NAN) setup procedure between electronic devices in a passive scanning mode according to an embodiment of the disclosure.

Referring to FIG. 27A, in operation 2701, the first electronic device (sender) 2710 and the second electronic device (receiver) 2720 may perform a BLE discovery procedure and, in operation 2703, the first electronic device (sender) 2710 and the second electronic device (receiver) 2720 may perform a NAN triggering procedure. According to an embodiment, the first electronic device (sender) 2710 may be referred to as an advertiser, and the second electronic device (receiver) 2720 may be referred to as a scanner. According to an embodiment, during a BLE discovery request procedure in the passive scanning mode, the first electronic device (sender) 2710 may transmit the advertisement indication message ADV_IND to the second electronic device (receiver) 2720.

In operation 2705, the first electronic device (sender) 2710 and the second electronic device (receiver) 2720 may set (or determine) the BLE task as Wi-Fi aware. In operation 2707, the first electronic device (sender) 2710 may transmit a service discovery frame (SDF) publish message to the second electronic device (receiver) 2720 for service discovery. In operation 2709, the second electronic device (receiver) 2720 may transmit an SDF follow-up message to the first electronic device (sender) 2710. In operation 2711, the second electronic device (receiver) 2720 may receive an SDF follow-up message from the first electronic device (sender) 2710.

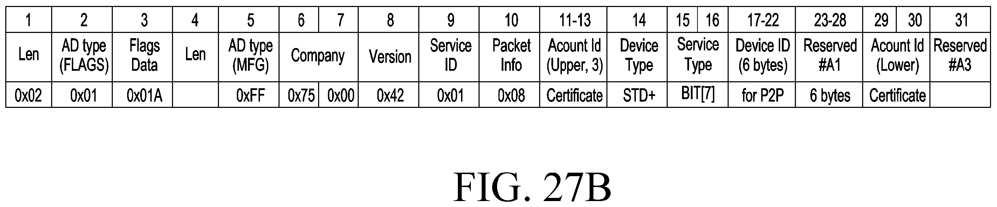

FIG. 27B illustrates an example of an advertisement indication message ADV_IND in a passive scanning mode according to an embodiment of the disclosure.

Referring to FIG. 27B, the advertisement indication message ADV_IND may include 31 fields. According to an embodiment, each field may be set in 1 byte.

The fifth to eighth fields in the advertisement indication message ADV_IND may be fields set (or defined) by the terminal manufacturer.

The 11th to 13th fields in the advertisement indication message ADV_IND may be set to Account Id (Upper, 3). According to an embodiment, the Account Id may be configured with upper 3 bytes set based on the user certificate (e.g., a fingerprint).

The 14th field in the advertisement indication message ADV_IND may be set as a device type. According to an embodiment, the device type may include at least one of type information about the corresponding electronic device (e.g., mobile, tablet, desktop, laptop, etc.) and supported network information (e.g., LAN support, AWARE support, or STD+aware support). According to an embodiment, when the device type, which is the 14th field in the advertisement indication message ADV_IND, is set to a predefined value (STD+), it may indicate that Wi-Fi aware (or STD+aware) according to an embodiment of the disclosure is supported.

The 15th and 16th fields in the advertisement indication message ADV_IND may be set as a service type. According to an embodiment, the service type may be set to FILESHARE, UWB, QR SCANNER, or the like.

The 17th to 22nd fields in the advertisement indication message ADV_IND may be set as a device ID. According to an embodiment, the device ID may be randomly set.

The 29th to 30th fields in the advertisement indication message ADV_IND may be set to Account Id (Lower, 2). According to an embodiment, the Account Id may be configured with lower 2 bytes set based on the user certificate (e.g., a fingerprint).

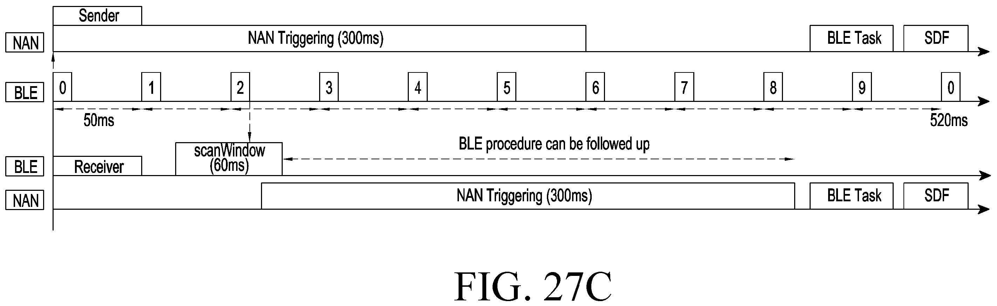

FIG. 27C illustrates an example for describing BLE discovery and NAN triggering operations in a passive scanning mode according to an embodiment of the disclosure.

Referring to FIG. 27C, the first electronic device (sender) and a second electronic device (receiver) may perform BLE discovery and/or NAN triggering operations.

In FIG. 27C, the BLE advertising interval of the first electronic device (sender) may be set to, e.g., 50 ms, and the BLE advertising message may be transmitted, e.g., on channels 37, 38, and 39. NAN triggering for each electronic device may be performed for, e.g., 300 ms. The second electronic device (receiver) may set, e.g., the scan window scanWindow for receiving a BLE message during a 60 ms time interval.

The first electronic device (sender) may transmit a BLE advertising message at each preset interval and perform an NAN triggering operation. The first electronic device (sender) may transmit 11 BLE advertising messages 0 to 9, 0 during the scan interval. For example, the first electronic device (sender) may transmit a BLE advertising message 0 and transmit a BLE advertising message 1 after a preset interval (e.g., 50 ms). According to an embodiment, the first electronic device (sender) may perform BLE Task and SDF-related operations after the NAN triggering operation.

The second electronic device (receiver) may receive a BLE advertising message transmitted by the first electronic device (sender) in a scan window scanWindow, which is a time interval set for receiving BLE.

The second electronic device (receiver) may receive the BLE advertising message 2 transmitted by the first electronic device (sender) in the scan window scanWindow. Thereafter, the second electronic device (receiver) may perform an NAN triggering operation. According to an embodiment, the second electronic device (receiver) may perform BLE Task and SDF-related operations after the NAN triggering operation. According to an embodiment, the second electronic device (receiver) may perform the BLE procedure after the scan window scanWindow.

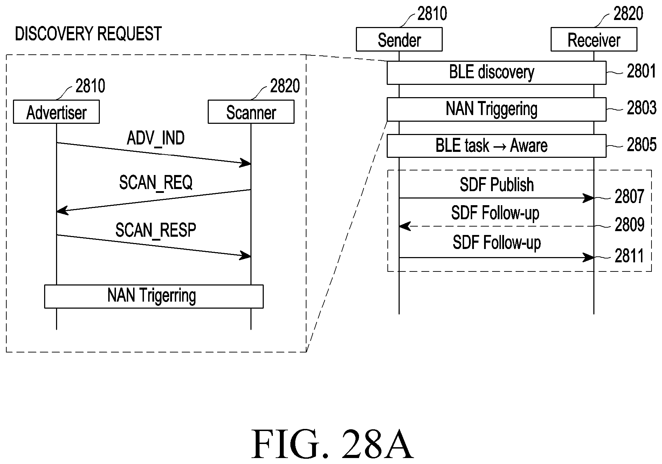

FIG. 28A illustrates another example of a NAN connection (Wi-Fi NAN) setup procedure between electronic devices in an active scanning mode according to an embodiment of the disclosure.

Referring to FIG. 28A, in operation 2801, the first electronic device (sender) 2810 and the second electronic device (receiver) 2820 may perform a BLE discovery procedure and, in operation 2803, the first electronic device (sender) 2810 and the second electronic device (receiver) 2820 may perform a NAN triggering procedure. According to an embodiment, the first electronic device (sender) 2810 may be referred to as an advertiser, and the second electronic device (receiver) 2820 may be referred to as a scanner.

According to an embodiment, during a BLE discovery request procedure in the active scanning mode, the first electronic device (sender) 2810 may transmit the advertisement indication message ADV_IND to the second electronic device (receiver) 2820. The first electronic device (sender) 2810 may receive the scan request message SCAN_REQ from the second electronic device (receiver) 2820. The first electronic device (sender) 2810 may transmit the scan response message SCAN_RESP to the second electronic device (receiver) 2820.

In operation 2805, the first electronic device (sender) 2810 and the second electronic device (receiver) 2820 may set (or determine) the BLE task as Wi-Fi aware. In operation 2807, the first electronic device (sender) 2810 may transmit a service discovery frame (SDF) publish message to the second electronic device (receiver) 2820 for service discovery.

In operation 2809, the second electronic device (receiver) 2820 may transmit an SDF follow-up message to the first electronic device (sender) 2810. In operation 2811, the second electronic device (receiver) 2820 may receive an SDF follow-up message from the first electronic device (sender) 2810.

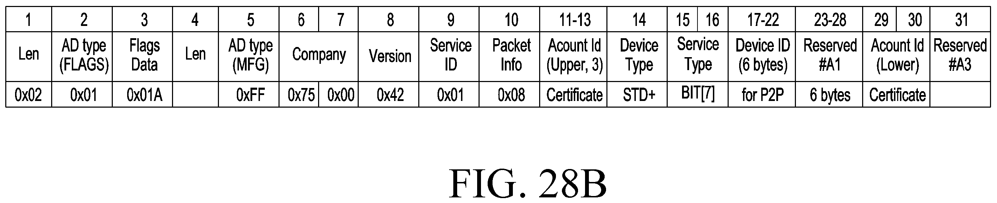

FIG. 28B illustrates an example of an advertisement indication message ADV_IND in an active scanning mode according to an embodiment of the disclosure.

Referring to FIG. 28B, the advertisement indication message ADV_IND may include 31 fields. According to an embodiment, each field may be set in 1 byte.

The fifth to eighth fields in the advertisement indication message ADV_IND may be fields set (or defined) by the terminal manufacturer.

The 11th to 13th fields in the advertisement indication message ADV_IND may be set to Account Id (Upper, 3). According to an embodiment, the Account Id may be configured with upper 3 bytes set based on the user certificate (e.g., a fingerprint).

The 14th field in the advertisement indication message ADV_IND may be set as a device type. According to an embodiment, the device type may include at least one of type information about the corresponding electronic device (e.g., mobile, tablet, desktop, laptop, etc.) and supported network information (e.g., LAN support, AWARE support, or STD+aware support). According to an embodiment, when the device type, which is the 14th field in the advertisement indication message ADV_IND, is set to a predefined value (STD+), it may indicate that Wi-Fi aware (or STD+aware) according to an embodiment of the disclosure is supported.

The 15th and 16th fields in the advertisement indication message ADV_IND may be set as a service type. According to an embodiment, the service type may be set to FILESHARE, UWB, QR SCANNER, or the like.

The 17th to 22nd fields in the advertisement indication message ADV_IND may be set as a device ID. According to an embodiment, the device ID may be randomly set.

The 29th to 30th fields in the advertisement indication message ADV_IND may be set to Account Id (Lower, 2). According to an embodiment, the Account Id may be configured with lower 2 bytes set based on the user certificate (e.g., a fingerprint).

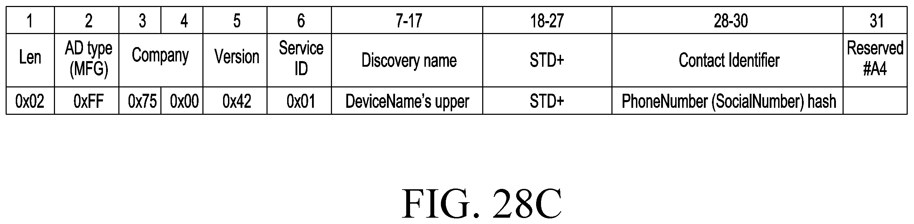

FIG. 28C illustrates an example of a scan response message SCAN_RESP in an active scanning mode according to an embodiment of the disclosure.

Referring to FIG. 28C, the scan response message SCAN_RESP may include 31 fields. According to an embodiment, each field may be set in 1 byte.

The 7th to 17th fields in the scan response message SCAN_RESP may be set as Discovery Name. According to an embodiment, the discovery name may be configured with upper 11 bytes of the DeviceName.

The 18th to 27th fields in the scan response message SCAN_RESP may be set to a predefined value (STD+) indicating that Wi-Fi aware (or STD+aware) according to an embodiment of the disclosure is supported.

The 28th to 30th fields in the scan response message SCAN_RESP may be set as a contact identifier. According to an embodiment, the contact identifier may be configured with a PhoneNumber (SocialNumber) hash value.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

**Claims**

1. A method for a first electronic device for Wi-Fi aware communication, the method comprising:

   transmitting a Bluetooth low energy (BLE) advertisement message including a neighbor awareness networking (NAN) synchronization frame format;
   transmitting a first service discovery frame (SDF) message to a second electronic device for service discovery between the first electronic device and the second electronic device;
   receiving a second SDF message corresponding to the first SDF message from the second electronic device; and
   establishing an NAN connection with the second electronic device.

2. The method of claim 1, wherein the NAN synchronization frame format includes:

   a field (STD+NAN) for identifying a packet type; and
   a second field (ACI) indicating an adaptive channel index.

3. The method of claim 1, wherein the first SDF message includes piggyback data for NAN synchronization, and
   wherein the piggyback data includes a time stamp field, a beacon interval field, and a capacity field.

4. The method of claim 2, further comprising determining the adaptive channel index based on at least one of industrial scientific and medical (ISM) frequency band regulation information, timeout information for identifying data validation, a QoS of basic service set (QBSS), and a received signal strength indicator (RSSI).

5. The method of claim 2, further comprising determining the adaptive channel index based on at least one of industrial scientific and medical (ISM) frequency band regulation information, timeout information for identifying data validation, and average information about a noise level in a Wi-Fi channel.

6. A method for a second electronic device for Wi-Fi aware communication, the method comprising:

   receiving, from a first electronic device, a Bluetooth low energy (BLE) advertisement message including a neighbor awareness networking (NAN) synchronization frame format;
   receiving, from the first electronic device, a first service discovery frame (SDF) message for service discovery between the first electronic device and a second electronic device;
   transmitting a second SDF message corresponding to the first SDF message to the first electronic device; and
   establishing an NAN connection with the first electronic device.

7. The method of claim 6, wherein the NAN synchronization frame format includes:

   a field (STD+NAN) for identifying a packet type; and
   a second field (ACI) indicating an adaptive channel index.

8. The method of claim 6, wherein the first SDF message includes piggyback data for NAN synchronization, and
   wherein the piggyback data includes a time stamp field, a beacon interval field, and a capacity field.

9. The method of claim 7, wherein the adaptive channel index is determined based on at least one of industrial scientific and medical (ISM) frequency band regulation information, timeout information for identifying data validation, a QoS of basic service set (QBSS), and a received signal strength indicator (RSSI).

10. The method of claim 7, wherein the adaptive channel index is determined based on at least one of industrial scientific and medical (ISM) frequency band regulation information, timeout information for identifying data validation, and average information about a noise level in a Wi-Fi channel.

11. A first electronic device for Wi-Fi aware communication, comprising:

    a transceiver; and
    a controller, wherein the controller is configured to:

    control to transmit a Bluetooth low energy (BLE) advertisement message including a neighbor awareness networking (NAN) synchronization frame format;
    control to transmit a first service discovery frame (SDF) message to a second electronic device for service discovery between the first electronic device and the second electronic device;

receive a second SDF message corresponding to the first SDF message from the second electronic device; and

establish an NAN connection with the second electronic device.

12. The first electronic device of claim 11, wherein the NAN synchronization frame format includes:

a field (STD+NAN) for identifying a packet type; and

a second field (ACI) indicating an adaptive channel index.

13. The first electronic device of claim 11, wherein the first SDF message includes piggyback data for NAN synchronization, and wherein the piggyback data includes a time stamp field, a beacon interval field, and a capacity field.

14. A second electronic device for Wi-Fi aware communication, comprising:

a transceiver; and

a controller, wherein the controller is configured to:

receive, from a first electronic device, a Bluetooth low energy (BLE) advertisement message including a neighbor awareness networking (NAN) synchronization frame format;

receive, from the first electronic device, a first service discovery frame (SDF) message for service discovery between the first electronic device and a second electronic device;

control to transmit a second SDF message corresponding to the first SDF message to the first electronic device; and

establish an NAN connection with the first electronic device.

15. The second electronic device of claim 14, wherein the NAN synchronization frame format includes:

a field (STD+NAN) for identifying a packet type; and

a second field (ACI) indicating an adaptive channel index.

FIG. 1

FIG. 2

FIG. 3

FIG. 4

Octets:

| | 2 | 2 | 6 | 6 | 6 | 2 | 8 | 2 | 2 | Var. | 8 or 16 | 4 |
|---|---|---|---|---|---|---|---|---|---|---|---|---|
| (a) | FC | Duration | A1 | A2 | A3 | Seq. Ctrl | Time Stamp | Beacon Interval | Capability | NAN IE | MME | FCS |

| | 2 | 2 | 6 | 6 | 6 | 2 | 8 | 2 | 2 | Var. | 8 or 16 | 4 |
|---|---|---|---|---|---|---|---|---|---|---|---|---|
| (b) | FC | Duration | A1 | A2 | A3 | Seq. Ctrl | Time Stamp | Beacon Interval | Capability | NAN IE | MME | FCS |

NAN Synchronization and NAN Discovery Beacon frame format

Octets:

| | 1 | 1 (2) | 6 (8) | 6 (14) | 8 (22) | 2 (24) | 2 (26) | 5 (31) |
|---|---|---|---|---|---|---|---|---|
| (c) | STD+ NAN | ACI | A2 | A3 | Time Stamp | Beacon Interval | Capability | Reserved (NAN IE) |

510   520

| | Access Address (4 octets) | Header (2 octets) | Payload | |
|---|---|---|---|---|
| | | | AdvA (6 octets) | NAN Sync. (0~31 octets) |
| (d) | | | | |

550

530   540   551   553

# FIG. 5

NAN IE format

| Field | Size (Octets) | Value (Hex) | Description |
|---|---|---|---|
| Element ID | 1 | 0xDD | IEEE 802.11 vendor specific information element |
| Length | 1 | Variable | Length of the following fields in the IE in octets. The Length field is variable, and set to 4 plus the total length of the NAN attributes. |
| OUI | 3 | 0x50-6F-9A | Wi-Fi Aliance specific OUI |
| OUI Type | 1 | 0x13 | Identifying the type and version of the NAN IE |
| NAN attributes | Variable | Variable | One or more NAN attribute |

NAN attributes in NAN Beacon frames

| Attributes | NAN Beacon frames | |
|---|---|---|
| | Synchronization | Discovery |
| Master Indication attribute | YES/M | YES/M |
| Cluster attribute | YES/M | YES/M |

FIG. 6

FIG. 7

810

Sender

820

Receiver

BLE discovery (Adv. #1) +
NAN Triggering — 801

SDF Follow-up — 803

SDF Publish — 805

SDF Follow-up — 807

SDF Follow-up — 809

FIG. 8

FIG. 9

EP 4 618 643 A1

EP 4 618 643 A1

| 1 | 1 (2) | 6 (8) | 6 (14) | 8 (22) | 2 (24) | 2 (26) | 5 (31) |
|---|-------|-------|--------|--------|--------|--------|--------|
| STD+ NAN | ACI | A2 | A3 | Time Stamp | Beacon Interval | Capability | Reserved (NAN IE) |

(a)

(b)

| Access Address (4 octets) | Header (2 octets) | Payload | |
|---|---|---|---|
| | | AdvA (6 octets) | NAN Sync. (0~31 octets) |

| Piggyback data |
|---|

(c)

| SDF (Publish/Subscribe/Follow-up) | Piggyback data |
|---|---|

| Piggyback data | SDF (Publish/Subscribe/Follow-up) |
|---|---|

FIG. 10

NAN Service Discovery frame format

| Field | Size (Octets) | Value (Hex) | Description |
|---|---|---|---|
| Category | 1 | 0x04 or 0x09 | IEEE 802.11 Public Action frame or Protected Dual of Public Action frame (see section 9.6.10 of [1]) |
| Action | 1 | 0x09 | IEEE 802.11 Public Action frame Vendor Specific |
| OUI | 3 | 0x50-6F-9A | Wi-Fi Aliance specific OUI |
| OUI Type | 1 | 0x13 | Identifying the type and version of the NAN |
| NAN attributes | Variable | Variable | One or more NAN attribute |
| MME | 8 or 16 | Variable | The MME is optionally present in group addressed SDFs, and if present, appears last in the fraem body to protect the frame, as specified in section 12.5.4 (Broadcast/multicast integrity protocol (BIP)) of [19] |

NAN attributes in NAN SDF frames

| Attributes | NAN SDF frames | | | | |
|---|---|---|---|---|---|
| | Publish | | | Subscribe | Follow-up |
| | Data Required | Ranging Required | Otherwise | | |
| Master Indication attribute | NO | NO | NO | NO | NO |
| Cluster attribute | NO | NO | NO | NO | NO |
| Service ID List attribute | NO | NO | NO | NO | NO |
| Service Descriptor attribute | YES/M | YES/M | YES/M | YES/M | YES/M |

FIG. 11

EP 4 618 643 A1

FIG. 12

EP 4 618 643 A1

FIG. 13

EP 4 618 643 A1

| STD+ | BLE Discovery + NAN Triggering | Service Discovery | NDP Setup | NAN Connection |
|------|--------------------------------|-------------------|-----------|----------------|

# FIG. 14

FIG. 15

EP 4 618 643 A1

| Element ID | Length | Station Count | Channel Utilization | Available Admission Capacity |
|:---:|:---:|:---:|:---:|:---:|
| | | | | |

Octets:      1         1         2              1                    2

## FIG. 16

| Access Address (4 octets) | Header (2 octets) | Payload | |
|:---:|:---:|:---:|:---:|
| | | AdvA (6 octets) | AdvData (0~31 octets) |

Advertising physical channel PUD
(ADV_NONCONN_IND)

## FIG. 17

$f_{ACS}$(country, timeout, QBSS, RSSI)

| ISM band regulation (country) | ~1810 |

| Data validation check (timeout) | ~1820 |

1830

yes ◇ QBSS no

| $\max_{k}(\max(CU_i))$ | ~1840 |

| ACI | ~1850 |

| $\max_{k}(\max(RSSI_i))$ | ~1860 |

| ACI | ~1870 |

CU: channel utilization

i: AP index
k: channel index

# FIG. 18

$f_{ACS}(country, timeout, noise_{BLE})$

```
┌─────────────────────────────────┐
│  ISM band regulation (country)  │──1910
└─────────────────────────────────┘
                 │
                 ▼
┌─────────────────────────────────┐
│  Data validation check (timeout)│──1920
└─────────────────────────────────┘
                 │
                 ▼
┌─────────────────────────────────┐
│   Calculate avg. noise level    │──1930
│         (noise_BLE)             │
└─────────────────────────────────┘
                 │
                 ▼
┌─────────────────────────────────┐
│      min (noise_BLE [k])        │──1940
└─────────────────────────────────┘
                 │
                 ▼
       ┌──────────────┐
       │     ACI      │──1950
       └──────────────┘
```

Wi-Fi Ch. 1

| 37 | 0 | 1 | 2 | 3 | 4 | 5 | 6 | 7 | 8 | 9 |

Calculate avg. noise level

## FIG. 19

$f_{ACS}(country)$

```
┌─────────────────────────────────┐
│  ISM band regulation (country)  │──2010
└─────────────────────────────────┘
                 │
                 ▼
       ┌──────────────┐
       │     ACI      │──2020
       └──────────────┘
```

## FIG. 20

FIG. 21

| 1 | 1 (2) | 6 (8) | 6 (14) | 8 (22) | 2 (24) | 2 (26) | 5 (31) |
|---|---|---|---|---|---|---|---|
| STD+<br>NAN | Ch. 6 | A2 | A3 | Time<br>Stamp | Beacon<br>Interval | Capability | Reserved<br>(NAN IE) |
| Piggyback data | | | | | | | |

# FIG. 22

| SDF<br>(Publish/Subscribe/Follow-up) | Piggyback<br>data |
|---|---|

# FIG. 23

**2430** Controller

**2410** Transceiver

**2420** Memory

# FIG. 24

**2530** Controller

**2510** Transceiver

**2520** Memory

# FIG. 25

FIG. 26A

Ⓐ

| STD + Aware |

2610                          2620

| Sender |          | Receiver |

| Info. exchange & Auth. | ～ 2653

SDF Publish + Sync.
2655 ─────────────────────────►
SDF Follow-up
2657 ◄─────────────────────────

Data Path Request
2659 ◄─────────────────────────
Data Path Response
2661 ─────────────────────────►
Data Path Confirm
2663 ◄─────────────────────────
Data Path Key Installment
2665 ─────────────────────────►

2667 ◄═══ NAN Connected ═══►

# FIG. 26B

FIG. 27A

| 1 | 2 | 3 | 4 | 5 | 6 | 7 | 8 | 9 | 10 | 11-13 | 14 | 15 | 16 | 17-22 | 23-28 | 29 | 30 | 31 |
|---|---|---|---|---|---|---|---|---|---|---|---|---|---|---|---|---|---|---|
| Len | AD type (FLAGS) | Flags Data | Len | AD type (MFG) | Company | | Version | Service ID | Packet Info | Acount Id (Upper, 3) | Device Type | Service Type | | Device ID (6 bytes) | Reserved #A1 | Acount Id (Lower) | | Reserved #A3 |
| 0x02 | 0x01 | 0x01A | | 0xFF | 0x75 | 0x00 | 0x42 | 0x01 | 0x08 | Certificate | STD+ | BIT[7] | | for P2P | 6 bytes | Certificate | | |

EP 4 618 643 A1

FIG. 27B

| NAN | Sender | NAN Triggering (300ms) | | BLE Task | SDF |

| BLE | 0 | 1 | 2 | 3 | 4 | 5 | 6 | 7 | 8 | 9 | 0 |

50ms · · · 520ms

scanWindow
(60ms)

BLE procedure can be followed up

| BLE | Receiver |

| NAN | NAN Triggering (300ms) | BLE Task | SDF |

FIG. 27C

FIG. 28A

| 1 | 2 | 3 | 4 | 5 | 6 | 7 | 8 | 9 | 10 | 11-13 | 14 | 15 | 16 | 17-22 | 23-28 | 29 | 30 | 31 |
|---|---|---|---|---|---|---|---|---|---|---|---|---|---|---|---|---|---|---|
| Len | AD type (FLAGS) | Flags Data | Len | AD type (MFG) | Company | | Version | Service ID | Packet Info | Acount Id (Upper, 3) | Device Type | Service Type | | Device ID (6 bytes) | Reserved #A1 | Acount Id (Lower) | | Reserved #A3 |
| 0x02 | 0x01 | 0x01A | | 0xFF | 0x75 | 0x00 | 0x42 | 0x01 | 0x08 | Certificate | STD+ | BIT[7] | | for P2P | 6 bytes | Certificate | | |

FIG. 28B

EP 4 618 643 A1

| 1 | 2 | 3 | 4 | 5 | 6 | 7-17 | 18-27 | 28-30 | 31 |
|---|---|---|---|---|---|---|---|---|---|
| Len | AD type (MFG) | Company | | Version | Service ID | Discovery name | STD+ | Contact Identifier | Reserved #A4 |
| 0x02 | 0xFF | 0x75 | 0x00 | 0x42 | 0x01 | DeviceName's upper | STD+ | PhoneNumber (SocialNumber) hash | |

## FIG. 28C

## INTERNATIONAL SEARCH REPORT

| International application No. |
|---|
| **PCT/KR2024/000639** |

| | |
|---|---|
| **A.** | **CLASSIFICATION OF SUBJECT MATTER** |

**H04W 56/00**(2009.01)i; **H04W 8/00**(2009.01)i; **H04W 4/80**(2018.01)i; **H04W 48/16**(2009.01)i; **H04W 74/08**(2009.01)i; **H04W 84/12**(2009.01)i

According to International Patent Classification (IPC) or to both national classification and IPC

| | |
|---|---|
| **B.** | **FIELDS SEARCHED** |

Minimum documentation searched (classification system followed by classification symbols)

H04W 56/00(2009.01); H02J 50/10(2016.01); H02J 50/90(2016.01); H04W 12/08(2009.01); H04W 4/80(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 와이파이 어웨어(Wi-Fi aware), NAN(neighbor awareness networking), 동기화 프레임 포맷(synchronization frame format), BLE(bluetooth low energy) 어드벌타이즈먼트 메시지 (advertisement message), SDF(service discovery frame), 적응형 채널 선택(adaptive channel selection)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X Y | LEE, Byung Moo et al. An Easy Network Onboarding Scheme for Internet of Things Networks. IEEE Access (Volume: 7). 28 December 2018. See pages 8764-8769; and figures 1-3. | 1,3,6,8,11,13-14 2,4-5,7,9-10,12,15 |
| Y | GOMES, Ruan D. et al. Adaptive and Beacon-based multi-channel protocol for Industrial Wireless Sensor Networks. Journal of Network and Computer Applications. Volume 132, 15 April 2019. See sections 1, 2.2, 3 and 4.3; and table 1. | 2,4-5,7,9-10,12,15 |
| A | KR 10-2326905 B1 (SAMSUNG ELECTRONICS CO., LTD.) 16 November 2021 (2021-11-16) See paragraphs [0034]-[0038]; and claim 1. | 1-15 |
| A | KR 10-2021-0050390 A (SAMSUNG ELECTRONICS CO., LTD.) 07 May 2021 (2021-05-07) See paragraph [0085]; and claim 1. | 1-15 |

☑ Further documents are listed in the continuation of Box C.　　☑ See patent family annex.

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 April 2024** | **12 April 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/000639**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0089906 A (SAMSUNG ELECTRONICS CO., LTD.) 19 July 2021 (2021-07-19) See paragraph [0066]; and claims 1-10. | 1-15 |

Form PCT/ISA/210 (second sheet) (July 2022)

**INTERNATIONAL SEARCH REPORT**
Information on patent family members

International application No.

**PCT/KR2024/000639**

| Patent document cited in search report | | | Publication date (day/month/year) | Patent family member(s) | | | Publication date (day/month/year) |
|---|---|---|---|---|---|---|---|
| KR | 10-2326905 | B1 | 16 November 2021 | CN | 107465942 | A | 12 December 2017 |
| | | | | CN | 107465942 | B | 27 July 2021 |
| | | | | EP | 3420731 | A1 | 02 January 2019 |
| | | | | EP | 3420731 | B1 | 26 February 2020 |
| | | | | KR | 10-2017-0137616 | A | 13 December 2017 |
| | | | | KR | 10-2306604 | B1 | 29 September 2021 |
| | | | | US | 10231227 | B2 | 12 March 2019 |
| | | | | US | 10609581 | B2 | 31 March 2020 |
| | | | | US | 2017-0353948 | A1 | 07 December 2017 |
| | | | | US | 2017-0353981 | A1 | 07 December 2017 |
| | | | | WO | 2017-209573 | A1 | 07 December 2017 |
| KR | 10-2021-0050390 | A | 07 May 2021 | CN | 114642011 | A | 17 June 2022 |
| | | | | EP | 4005257 | A1 | 01 June 2022 |
| | | | | US | 11546748 | B2 | 03 January 2023 |
| | | | | US | 11889581 | B2 | 30 January 2024 |
| | | | | US | 2021-0127249 | A1 | 29 April 2021 |
| | | | | US | 2023-0132947 | A1 | 04 May 2023 |
| | | | | WO | 2021-085850 | A1 | 06 May 2021 |
| KR | 10-2021-0089906 | A | 19 July 2021 | WO | 2021-141282 | A1 | 15 July 2021 |

Form PCT/ISA/210 (patent family annex) (July 2022)